# EUROPEAN PATENT APPLICATION

(11) **EP 1 519 369 A1**
(43) Date of publication of application: **30.03.2005**
(21) Application number: 04255682.9
(22) Date of filing: 17.09.2004
(51) Int. Cl.: G11B 7/24, B41M 5/00

(54) **Information medium having printable layer**

(30) Priority: 19.09.2003 JP 2003327426; 25.09.2003 JP 2003332863
(71) Applicant: Fuji Photo Film Co., Ltd., Kanagawa (JP)
(72) Inventor: Matsubaguchi, Satoshi c/o Fuji Photo Film Co. Ltd., Odawara-shi Kanagawa (JP); Ose, Takayoshi c/o Fuji Photo Film Co. Ltd., Kanagawa (JP)
(74) Representative: Stevens, Jason Paul

(57) **Abstract**

An information medium comprising a printable layer that comprises at least an undercoat layer and a colorant-receiving layer, wherein the colorant-receiving layer comprises at least fine particles, a binder and a cross-linking agent; and the undercoat layer has a thickness of 15 µm or more and an information medium comprising a printable layer that comprises at least an undercoat layer and a colorant-receiving layer, wherein the undercoat layer comprises at least a smoothing layer that controls glossiness of the printable layer and a chromaticity control layer that controls chromaticity of the printable layer.

## Description

### BACKGROUND OF THE INVENTION

### Field of the Invention

The present invention relates to an information medium having a printable layer on which letters, pictures and the like can be printed.

### Description of the Related Art

Forms of information media that are widely accepted in the market include CD (Compact Disc) and DVD (Digital Versatile Disc).

CDs include CD-ROM (read-only type), CD-R (write-once-read-many type) and CD-RW (rewritable type).

A typical CD-ROM comprises a transparent substrate 120 mm in diameter and 1.2 mm in thickness on which a series of pits are formed with a track pitch of 1.6 µm, and has a storage capacity of about 650 Mbytes. Information is reproduced from such a CD-ROM at a constant linear velocity of 1.2 to 1.4 m/s by directing a laser beam with a wavelength of 770 to 790 nm.

Similarly to CDs, DVDs include DVD-ROM, DVD-R and DVD-RW.

A DVD-ROM can have a recording density about 6 to 8 times higher than that of a CD. For example, a DVD comprises two pieces of substrates which have a thickness of about 0.6-mm and which are bonded to each other. Pits are formed on the substrates with a track pitch of 0.74 µm. Information is reproduced from such a DVD-ROM at a constant linear velocity of about 3.5 m/s by directing a laser beam with a wavelength of 635 to 650 nm.

In recent years, CDs and DVDs have been developed which have a printable layer formed on the face opposite to the information reproduction face, wherein an image can be printed on the layer with an inkjet printer (for example, see Japanese Patent Application Laid-Open (JP-A) No. 2002-245671). In such information media, the printable layers are generally made of UV curing resins. As compared with an inkjet recording sheet, however, the printable layers made of the UV curing resins provide a low image quality. Specifically, in a medium, even if a primary coat is provided under the printable layer made of the UV curing resin, such a primary coat have a thickness of only about 10 µm. Therefore, the printable layer cannot have a sufficient lightness owing to an influence from the color of the pigment in the recording layer on the opposite side. It is also difficult for such a printable layer to have both suitable chromaticity and sufficinet lightness, which are necessary for obtaining a high image quality. It was proposed to define a specific lightness (L*) in order to achieve a high image quality (for example, see JP-A Nos. 2003-59112 and 2003-123323). It was also proposed to define a specific surface color (a*, b*) in order to achieve a high image quality (for example, see JP-A Nos. 2003-59112 and 10-162438). However, these proposals provide no practical method, and their effect is not sufficient.

In addition, the UV curing resin can irritate skin and has a problem in material safety. The UV curing resin also has handling problems, because it has to be stored in a dark place at room temperature and has a short storage life and an unpleasant odor that deteriorates work environment.

### SUMMARY OF THE INVENTION

It is an object of the present invention to solve the above problems. Specifically, an object of the invention is to provide an information medium having a highly-glossy printable layer which is not harmful at handling and which high quality pictures can be printed on.

### Specifically,

A first aspect of the invention is to provide an information medium comprising a printable layer that comprises an undercoat layer and a colorant-receiving layer, wherein the colorant-receiving layer comprises fine particles, a binder and a cross-linking agent, and the undercoat layer has a thickness of at least 15 µm.

A second aspect of the invention is to provide an information medium comprising a printable layer that comprises an undercoat layer and a colorant-receiving layer, wherein the colorant-receiving layer comprises fine particles, a binder and a cross-linking agent, and the undercoat layer comprises: a smoothing layer that controls glossiness of the printable layer; and a chromaticity control layer that controls chromaticity of the printable layer.

A third aspect of the invention is to provide an information medium comprising a printable layer that comprises an undercoat layer and a colorant-receiving layer, wherein the colorant-receiving layer comprises fine particles, a binder and a cross-linking agent; the undercoat layer comprises a smoothing layer and a chromaticity control layer; the smoothing layer controls glossiness of the printable layer; the chromaticity control layer controls chromaticity of the printable layer; according to L*a*b* colorimetric system defined in JIS Z 8729 and CIE1976, the undercoat layer has an a* value of larger than -4 and smaller than 4 (-4 < a* < 4) and a b* value of larger than -6 and smaller than 3 (-6 < b* < 3); and the smoothing layer has a glossiness of 30% or higher at 45°.

### DESCRIPTION OF THE PRESENT INVENTION

A first embodiment of the invention provides an information medium comprising a printable layer that comprises an undercoat layer and a colorant-receiving layer, wherein the colorant-receiving layer includes fine particles, a binder and a cross-linking agent, and the undercoat layer has a thickness of 15 µm or more.

A second embodiment of the invention provides an information medium comprising a printable layer that comprises an undercoat layer and a colorant-receiving layer, wherein the colorant-receiving layer includes fine particles, a binder and a cross-linking agent, and the undercoat layer comprises: a smoothing layer that controls glossiness of the printable layer; and a chromaticity control layer that controls chromaticity of the printable layer.

A third embodiment of the invention provides an information medium comprising a printable layer that comprises an undercoat layer and a colorant-receiving layer, wherein the colorant-receiving layer includes fine particles, a binder and a cross-linking agent; the undercoat layer comprises a smoothing layer and a chromaticity control layer; the smoothing layer controls glossiness of the printable layer; the chromaticity control layer controls chromaticity of the printable layer; in L*a*b* colorimetric system according to JIS Z 8729 and CIE1976, the undercoat layer has an a* value of larger than -4 and smaller than 4 (-4 < a* < 4) and a b* value of larger than -6 and smaller than 3 (-6 < b* < 3); and the smoothing layer has a glossiness of 30% or more at 45°. JIS Z 8729 is incorporated herein by reference. Also, CIE (Commision Internationale de l'Eclairage (International Light Comission)) 1976 is incorporated herein by reference.

The information medium of the invention can be applied to magnetic media, optical media, semiconductor media, or the like. The information medium of the invention may be in the form of a disc or a tape or may be a cartridge type. When the medium are of cartridge type, the medium is preferably removable. Particularly preferred is a disc-shaped optical information-recording medium (optical disc).

The type of the optical disc is not restricted, and may be CD, DVD, or a disc which information can be recorded on or reproduced from with a blue-violet laser.

There are two kinds of blue-violet laser recording type media: laminate type media such as DVD; and the media each comprising a 1.1 mm substrate and a recording layer and a cover layer provided on the substrate wherein a laser beam comes from the cover layer side. The medium of the invention may be of any of these types.

The printable layer is basically formed on a side opposite to the side of the incident laser-beam. Even on the side of the incident laser-beam, however, the printable layer may be provided in an area if the incident laser-beam does not irradiate the area.

The information medium of the invention may be of ROM type, of the rewritable type or of the write-once-read-many type. The write-once-read-many type is particularly preferred.

### Printable Layer

The information medium of the invention has a printable layer that comprises at least an undercoat layer and a colorant-receiving layer. Each layer is described below.

### Undercoat Layer

The information medium of the first embodiment of the invention comprises an undercoat layer with a thickness of 15 µm or more. When the thickness of the undercoat layer is at least 15 µm, the medium is highly even and glossy; specifically a glossiness at 45° can be 30% or more.

If a highly opaque undercoat layer is provided, its diffusion property can be close to paper so that image quality can be improved. In particular, a white undercoat layer can provide good color-reproducibility. A high-gloss undercoat layer can produce a glossy photograph-like finish. A highly mat undercoat layer can produce a mat photograph-like finish. Undercoat layers having various colors can produce images of various impressions. A fluorescent undercoat layer can create a fluorescent image.

In the invention, the thickness of the undercoat layer is 15 µm or more, preferably 20 µm or more, more preferably 25 µm or more. The thickness of the undercoat layer is preferably no more than 50 µm.

Any method may be used to form the undercoat layer. In terms of productivity, the undercoat layer is formed preferably through screen-printing a radiation curing resin. A radiation curing resin refers to a resin that can be cured by an electromagnetic waves such as ultraviolet rays, electron beams, X-rays, γ-rays, and infrared rays. In particular, UV rays or electron beams are preferred as the radiation. In order to form the undercoat layer as thick as at least 15 µm, the step of screen-printing and radiation-curing may be performed at least two times so as to provide the total thickness of at least 15 µm. Namely, a plurality of layers each having a thickness of less than 15 µm may be stacked to form an undercoat layer with a thickness of 15 µm or more.

In the information medium according to the second or third aspect of the invention, the undercoat layer comprises at least two layers including a smoothing layer that controls glossiness of the printable layer and a chromaticity control layer that controls chromaticity of the printable layer. In such a multilayer undercoat, because the layer for controlling glossiness of the printable layer (the smoothing layer) and the layer for controlling chromaticity of the printable layer (the chromaticity control layer) have separate functions, a good chromaticity can be compatible with a good glossiness and a printable layer of high image quality can be obtained. In addition, such an undercoat layer can improve a photo paper-like image quality. The smoothing layer and the chromaticity control layer may be stacked in any order.

Specifically, in L*a*b* colorimetric system according to JIS Z 8729 and CIE1976, the undercoat layer has an a* value of preferably larger than -4 and smaller than 4 (-4 < a* < 4) and a b* value of larger than -6 and smaller than 3 (-6 < b* < 3). If the chromaticity of the undercoat layer is in such a range, the whiteness can be increased, and a printable layer of high image quality can be obtained. The L* value is preferably 91 or more, more preferably 92 or more. The L* value has an upper limit of 100. The a* value is more preferably larger than -2 and smaller than 2 (-2 < a* < 2), still more preferably larger than -1 and smaller than 1 (-1 < a* < 1). The b* value is more preferably larger than -5 and smaller than 2 (-5 < b* < 2), still more preferably larger than -4 and smaller than 1 (-4 < b* < 1).

The glossiness of the smoothing layer at 45° is preferably 30% or more, more preferably 35% or more, still more preferably from 40% to 90%. The glossiness may be measured with a digital glossmeter (GK-45D manufactured by Suga Test Instrument Co., Ltd.) or the like.

The glossiness of the smoothing layer of 30% or more at 45° can be achieved by selecting appropriate constituent materials of the smoothing layer. For example, if a UV curing resin is used as a material of the smoothing layer, an ink with low viscosity and high leveling performance may be used.

The a* and b* values of the chromaticity control layer can each be set in the above range, for example by addition of an indigo ink, a violet ink, or a mixture thereof.

The thickness of the smoothing layer is preferably from 3 to 30 µm, more preferably from 6 to 20 µm, most preferably from 8 to 13 µm. The thickness of the chromaticity control layer is preferably from 3 to 30 µm, more preferably from 6 to 20 µm, most preferably from 8 to 13 µm.

The total thickness of the undercoat layer is preferably from 6 to 60 µm, more preferably from 12 to 40 µm, most preferably from 16 to 26 µm.

### Colorant-Receiving Layer

According to the invention, the colorant-receiving layer comprises at least fine particles, a binder and a cross-linking agent and may optionally comprise a compound or compounds selected from the following: compounds represented by Formula (1) below; compounds represented by Formula (2) below; mordants; various additives; or the like.

According to the invention, the colorant-receiving layer may also include any known surfactant to increase coating suitability or surface quality, any known ion-conductive surfactant to suppress frictional charge or peeling charge on the surface, an antioxidant or UV absorber to increase anti-light-fading property, a sulfur-containing compound to increase anti-ozone-fading property, or the like, unless the effect of the invention is ruined.

### Fine Particles

As described above, the colorant-receiving layer according to the invention contains fine particles. The fine particles are made preferably of vapor-phase-synthesized silica, pseudo-boehmite, aluminum oxide, titanium dioxide, barium sulfate, calcium silicate, zeolite, kaolinite, halloysite, mica, talc, calcium carbonate, magnesium carbonate, calcium sulfate, boehmite, or the like. Particularly preferred are vapor-phase-synthesized silica, pseudo-boehmite and aluminum oxide.

### Vapor-Phase-Synthesized Silica

In general, the type of fine silica particles is broadly classified into wet method particles and dry method (vapor-phase-synthesized) particles by their manufacturing methods. Usually, the wet method includes the steps of producing anactive silica by acid decomposition of a silicate, polymerizing the active silica to an appropriate degree and flocculating and precipitating it to form a hydrated silica. An usual vapor-phase method is a method (flame hydrolysis method) of producing anhydrous silica by high-temperature vapor-phase hydrolysis of halogenated silicon or a method (arc method) of producing anhydrous silica by air oxidation of the product which is obtained by heating, reducing and vaporizing quartz sand and coke by arc in an electric furnace. The term "vapor-phase-synthesized silica" refers to fine anhydrous silica particles produced by such a vapor-phase method.

The vapor-phase-synthesized silica differs from the hydrated silica in the density of the surface silanol group, the degree of void, thus has characters different from that of the hydrated silica. The vapor-phase-synthesized silica can easily have a three-dimensional structure with high porosity. Although the reason for the difference is not well-explained, the following explanation is possible: the surface of the fine hydrated silica particle has a relatively high silanol-group density of 5 to 8 per nm² so that the fine silica particles can tend to aggregate densely, while the surface of the fine vapor-phase-synthesized silica particle has a relatively low silanol-group density of 2 to 3 per nm² so that a sparse soft flocculate can occur and thus it can form a high-porosity structure.

The vapor-phase-synthesized silica has a particularly large specific surface area and thus can provide a high efficiency of ink absorption or retention. Because the vapor-phase-synthesized silica has a low refractive index, it can provide transparency to the colorant-receiving layer when dispersed with an appropriate particle diameter. Therefore, a high color-density and good color development is obtained.

The vapor-phase-synthesized silica has an average primary particle diameter of preferably 30 nm or less, more preferably 20 nm or less, particularly preferably 10 nm or less, most preferably 3 to 10 nm. The vapor-phase-synthesized silica particles can easily adhere to each other by hydrogen bonding through the silanol group. Therefore, the vapor-phase-synthesized silica with an average primary particle diameter of 30 nm or less can form a high-porosity structure and can effectively provide improved ink-absorption property.

The vapor-phase-synthesized silica may be used in combination with other fine inorganic pigment particles such as fine hydrated silica particles, colloidal silica, titanium dioxide, barium sulfate, calcium silicate, zeolite, kaolinite, halloysite, mica, talc, calcium carbonate, magnesium carbonate, calcium sulfate, boehmite, and pseudo-boehmite. When the vapor-phase-synthesized silica is used with other fine inorganic pigment particles, the content of the vapor-phase-synthesized silica in all the inorganic pigment particles is preferably 50% by mass or more, more preferably 70% by mass or more.

### Pseudo-Boehmite

Pseudo-boehmite can be represented by the formula: Al₂O₃·xH₂O (1 < x < 2), which is a layered compound generally forming a huge (020) crystal plane and having a lattice constant (d) of 0.67 nm. Such pseudo-boehmite has a structure containing an excess of water between the (020) plane layers. Pseudo-boehmite can well absorb and fix inks and thus can improve ink-absorption characteristics and anti-spreading property of ink over time.

Sol type pseudo-boehmite (pseudo-boehmite sol) is preferably used as a raw material, because it can easily form a smooth layer.

The pseudo-boehmite preferably has an average primary particle diameter of 50 nm or less, more preferably of 30 nm or less, particularly preferably of 3 to 20 nm. The pseudo-boehmite with an average primary particle diameter in such a range can form a high-porosity structure and can also provide improved ink-absorption characteristics to the colorant-receiving layer. The average primary particle diameter may be determined, for example, by using an electron microscope. The pseudo-boehmite preferably has a BET specific surface area of 40 to 500 m², more preferably of 200 to 500 m².

The pseudo-boehmite preferably has an aspect ratio of 3 to 10. The porous structure of the pseudo-boehmite preferably has an average pore radius of 1 to 30 nm, more preferably of 2 to 15 nm, and preferably has a pore volume of 0.3 to 2.0 ml/g (cc/g), more preferably of 0.5 to 1.5 ml/g (cc/g). The pore radius and the pore volume may be measured by nitrogen adsorption/desorption method, and may be measured for example by using a gas adsorption/desorption analyzer (for example, OMNISORP 369 (trade name) manufactured by Beckman Coulter, Inc.).

The pseudo-boehmite is preferably dispersed in an aqueous solvent before use. In such a dispersion, the content of the pseudo-boehmite is preferably 60% by mass or less, more preferably from 5 to 60% by mass, particularly preferably from 10 to 50% by mass.

In the above range, the pseudo-boehmite is effectively dispersed so that an increase in viscosity or gelling can effectively be suppressed, which would otherwise occur owing to a short distance between the pseudo-boehmite particles during the process of dispersion or the like.

The ratio (S:A) between the content of the pseudo-boehmite (A) and the content of the vapor-phase-synthesized silica (S) for use in combination is preferably in the range from 95:5 to 5:95, more preferably from 80:20 to 20:80, particularly preferably from 70:30 to 30:70.

In the above content ratio range, the combination of the vapor-phase-synthesized silica and the pseudo-boehmite can effectively prevent all different inks from spreading over time in a hue-independent manner, so that even when a multicolored image is formed, the formed image and the stored image can be clear and of high resolution.

### Aluminum Oxide

In the invention, aluminum oxide that can be used may be anhydrous alumina such as α-alumina, δ-alumina, θ-alumina, or χ-alumina or activated aluminum oxide. Particularly preferred are fine δ-alumina particles. In terms of manufacturing process, preferred are fine alumina particles produced by vapor-phase method, specifically fine vapor-phase-synthesized alumina particles produced by hydrolyzing gaseous metal chloride in the presence of water generated by oxyhydrogen reaction at a temperature specific to such reaction, because such particles have a relatively large specific surface area.

The aluminum oxide may have a specific diameter(s) and may be in the form of fine particles, particulates, fine-grain particles, a powder, a fine powder, a fine-grain powder, or the like. Its average primary particle diameter is preferably 200 nm or less, more preferably from 5 to 100 nm, particularly preferably from 5 to 20 nm. The fine alumina particles with an average primary particle diameter in the above range can form a high-porosity structure and can also provide improved ink-absorption characteristics for the colorant-receiving layer. The average primary particle diameter may be measured, for example, by using an electron microscope.

In the invention, the aluminum oxide is preferably used in a form of a dispersion. In such a dispersion, the content of the oxide aluminum is preferably 60% by mass or less, more preferably from 5 to 60% by mass, particularly preferably from 10 to 50% by mass. In the above content range, the aluminum oxide can effectively be dispersed. For example, if the content of the aluminum oxide in the dispersion is at most 60% by mass, an increase in viscosity or gelling can effectively be suppressed, which would otherwise occur owing to a short distance between the aluminum oxide particles in the dispersion or the like. A cationic polymer having a primary, secondary or tertiary amino group or a salt thereof or a quaternary ammonium salt group may also be added as an anti-coagulation agent to the dispersion. The addition amount of the anti-coagulation agent is preferably from 1 to 10% by mass, more preferably from 1 to 5% by mass, based on the amount of the fine aluminum oxide particles. If the addition amount is less than 1% by mass, the dispersion quality can be poor. An addition amount of more than 10% by mass can cause a reduction in color density at the time when a picture is printed on the colorant-receiving layer, and thus is not preferred.

The solids content of the oxide aluminum in the colorant-receiving layer is preferably 50% by mass or more, more preferably 60% by mass or more. A content of more than 60% by mass is preferred, because the aluminum oxide in such a concentration can form a better porous structure so that the resulting colorant-receiving layer can have sufficient ink-absorption characteristics. Herein, the solids content of the aluminum oxide in the colorant-receiving layer is calculated based on the amount of components other than water in the colorant-receiving layer.

In the invention, the aluminum oxide may be used in combination with any other fine particles. When the aluminum oxide is used with any other fine particles, the content of the aluminum oxide in the total fine particles is preferably 30% by mass or more, more preferably 50% by mass or more.

The other fine particles may be any of fine organic particles and fine inorganic particles, and the fine inorganic particles are preferred in terms of ink absorption characteristics and image stability.

### Binder

According to the invention as described above, the colorant-receiving layer includes the binder. A water-soluble resin is preferably used as the binder.

Examples of such a water-soluble resin include: polyvinyl alcohol type resins, which has hydroxyl groups as hydrophilic structure units, such as polyvinyl alcohols (PVAs), acetoacetyl-modified PVAs, cation-modified PVAs, anion-modified PVAs, silanol-modified PVAs, and polyvinyl acetals; cellulose type resins such as methylcelluloses (MCs), ethyl celluloses (ECs), hydroxyethyl celluloses (HECs), carboxymethylcelluloses (CMCs), hydroxypropylcelluloses (HPCs), hydroxyethylmethylcelluloses, and hydroxypropylmethylcelluloses; chitins, chitosans, and starch; resins having ether bonds such as polyethylene oxide (PEO), polypropylene oxide (PPO), polyethylene glycol (PEG), and polyvinyl ether (PVE); and resins having carbamoyl groups such as polyacrylamide (PAAM), polyvinylpyrrolidone (PVP), and polyacrylic hydrazide.

Water-soluble resins having carboxyl groups as dissociative groups may also be used such as polyacrylate salts, maleic acid resins, alginate salts, and gelatins.

In particular, polyvinyl alcohol (PVA) resins are preferred. Examples of such polyvinyl alcohol resins include the resins disclosed in Japanese Patent Application Publication (JP-B) Nos. 4-52786, 5-67432 and 7-29479, Japanese Patent No. 2537827, JP-B No. 7-57553, Japanese Patent Nos. 2502998, 3053231, JP-A No. 63-176173, Japanese Patent No. 2604367, JP-A Nos. 7-276787, 9-207425, 11-58941, 2000-135858, 2001-205924, 2001-287444, 62-278080, and 09-39373, Japanese Patent No. 2750433, and JP-A Nos. 2000-158801, 2001-213045, 2001-328345, 08-324105, and 11-348417.

Examples of the water-soluble resins other than the polyvinyl alcohol resins include the compounds disclosed in paragraphs [0011] to [0014] of JP-A No. 11-165461.

One or more of these water-soluble resins may be used alone or in combination. In the invention, the content of the water-soluble resin is preferably from 9 to 40% by mass, more preferably 12 to 33% by mass, based on the mass of the total solids in the colorant-receiving layer.

The polyvinyl alcohol resin may be used in combination with any other water-soluble resin. If the polyvinyl alcohol resins are used with any other water-soluble resin, the content of the polyvinyl alcohol resins in the whole of the water-soluble resins is preferably 50% by mass or more, more preferably 70% by mass or more.

The polyvinyl alcohol comprises structural units which have hydroxyl groups, and the hydroxyl groups can form a hydrogen bond with silanol groups on the fine silica particles to facilitate formation of a three-dimensional network comprising secondary fine silica particles as chain units. The three-dimensional network can form a porous colorant-receiving layer with high porosity.

In inkjet recording, the porous colorant-receiving layer produced as shown above can rapidly absorb ink by capillarity action so that nearly completely circular dots can be formed without ink spreading.

In terms of transparency, the polyvinyl alcohol preferably has a saponification degree of 70 to 99%, more preferably of 80 to 99%.

### Content Ratio of Fine Particles to Water-Soluble Resin

The ratio of the mass content of the fine particles (x) to that of the water-soluble resin (y) [PB ratio (x/y)] significantly affects the structure and strength of the colorant-receiving layer. Specifically, as the mass content ratio (PB content ratio) increases, the porosity, the pore volume, and the surface area (per unit mass) tends to increase, but the density or the strength tends to decrease.

In the colorant-receiving layer according to the invention, the mass content ratio [PB ratio (x/y)] is preferably from 1.5/ 1 to 10/1 in order to prevent a reduction in film strength or cracking at the time of drying, which would otherwise occur if the PB ratio is too large, or to prevent a reduction in ink absorption, which would otherwise occur if the PB ratio is so small that the pores are blocked by the resin and the porosity becomes lower.

The information medium can receive stress when it passes through a transportation system in an inkjet recording printer. Thus, the colorant-receiving layer should preferably have sufficient film strength. When the medium is cut into the shape of a sheet, the colorant-receiving layer can crack or peel off. In order to avoid such accidents, the colorant-receiving layer should also preferably have sufficient film strength. In view of these facts, the PB ratio (x/y) is preferably 5/1 or less. In terms of ensuring high speed ink absorption, the PB ratio is preferably 2:1 or larger.

For example, if fine vapor-phase-synthesized-silica particles with an average primary particle diameter of 20 nm or less and the water-soluble resin are mixed in a PB (x/y) ratio of 2/1 to 5/1 and completely dispersed in an aqueous solution to form a coating liquid, the coating liquid is applied to a support, and the coating layer is dried so as to form a three-dimensional network structure, then the network chain of secondary fine silica particles is formed. In such a case, a translucent porous film can easily be produced with an average pore diameter of 30 nm or less, a porosity of 50 to 80%, a specific pore volume of 0.5 ml/g or more, and a specific surface area of 100 m²/g or more.

### Cross-linking Agent

The colorant-receiving layer contains the cross-linking agent capable of cross-linking the binder. The cross-linking reaction between the cross-linking agent and the binder can produce a cured porous layer.

A boron compound is preferably used to cross-link the water-soluble resin, particularly the polyvinyl alcohol. Examples of such a boron compound include borax, boric acid, borates such as orthoborates, InBO₃, ScBO₃, YBO₃, LaBO₃, Mg₃(BO₃)₂, and Co₃(BO₃)₂, diborates such as Mg₂B₂O₅ and Co₂B₂O₅, metaborates such as LiBO₂, Ca(BO₂)₂, NaBO₂, and KBO₂, tetraborates such as Na₂B₄O₇·10H₂O, and pentaborates such as KB₅O₈·4H₂O, Ca₂B₆O₁₁·7H₂O, and CsB₅O₅. Borax, boric acid, or a borate is preferred because they can rapidly cause the cross-linking reaction. Boric acid is particularly preferred.

Any compound other than the boron compound may be used as the cross-linking agent for the water-soluble resin. Examples of such an agent include aldehyde compounds such as formaldehyde, glyoxal, succinaldehyde, glutaraldehyde, dialdehyde starch, and dialdehyde derivatives of vegetable gum; ketone compounds such as diacetyl, 1,2-cyclopentanedione and 3-hexene-2,5-dione; active halogen compounds such as bis(2-chloroethyl)urea, bis(2-chloroethyl)sulfone and sodium salt of 2,4-dichloro-6-hydroxy-s-triazine; active vinyl compounds such as divinylsulfone, 1,3-bis(vinylsulfonyl)-2-propanol, N,N'-ethylenebis(vinylsulfonylacetamide), divinyl ketone, 1,3-bis(acryloyl)urea, 1,3,5-triacryloyl-hexahydro-s-triazine; N-methylol compounds such as dimethylol urea and methylol dimethyl hydantoin; melamine compounds such as trimethylol melamine, alkylated methylol melamine, melamine, benzoguanamine, and melamine resins; epoxy compounds such as ethylene glycol diglycidyl ether, propylene glycol diglycidyl ether, polyethylene glycol diglycidyl ether, diglycerol polyglycidyl ether, spiroglycol diglycidyl ether, and polyglycidyl ethers of phenolic resins; isocyanate compounds such as 1,6-hexamethylene diisocyanate and xylylene diisocyanate; aziridine compounds such as the compounds disclosed in U.S. Patent Nos. 3,017,280 and 2,983,611; carbodiimide compounds such as the compounds disclosed in U.S. Patent No. 3,100,704; ethylene imino compounds such as 1,6-hexamethylene-N,N'-bisethylene urea; halogenated carboxyaldehyde compounds such as mucochloric acid and mucophenoxychloric acid; dioxane compounds such as 2,3-dihydroxydioxane; metal-containing compounds such as titanium lactate, aluminum sulfate, chromium alum, potassium alum, zirconyl acetate, and chromium acetate; polyamine compounds such as tetraethylenepentamine; hydrazide compounds such as adipic acid dihydrazide; low molecular-weight compounds or polymers having two or more oxazoline groups; anhydrides, acid chlorides or bis(sulfonate) compounds of polyacids such as the compounds disclosed in U.S. Patent Nos. 2,725,294, 2,725,295, 2,726,162, and 3,834,902; and active ester compounds such as the compounds disclosed in U.S. Patent Nos. 3,542,558 and 3,251,972.

Only one cross-linking agent may be used alone or two or more cross-linking agents may be used in combination.

The cross-linking agent is preferably added at the time when the coating liquid for forming the porous colorant-receiving layer (colorant-receiving layer coating liquid) is applied or before the time when the coating layer formed by application of the colorant-receiving layer coating liquid shows a falling drying rate. Such a process can effectively prevent cracking, which would otherwise occur while the coating layer is dried. In such a case, therefore, the boron compound solution (the cross-linking agent solution) can penetrate into the coating layer at the time when the coating liquid is applied or before the time when the coating layer shows a falling drying rate, so that it can rapidly react with the polyvinyl alcohol in the coating layer to form a gel of the polyvinyl alcohol (to cure the polyvinyl alcohol) and thus can immediately and significantly increase the strength of the coating layer.

According to the invention, the colorant-receiving layer is preferably formed by a method comprising: applying, to the surface of the undercoat layer, a coating liquid which is produced by adding a solution (first solution) including the binder and the compound represented by Formula (1) and/ or the compound represented by Formula (2) to an aqueous dispersion comprising the vapor-phase-synthesized silica and a dispersant and dispersing them again; and adding a mordant-containing solution (second solution) to the above coating solution at the time of the application or adding a mordant-containing solution (second solution) to the coating layer formed by the application of the above coating solution before the time when the coating layer shows a falling drying rate during a process of drying the coating layer. In this method, the cross-linking agent is preferably added to both of the first solution which is to be added to the coating liquid and the second solution which is to be added later.

If the polyvinyl alcohol is used in combination with gelatin, any of the compounds below, each known as an agent for hardening a gelatin film, may be used as a cross-linking agent in combination with the boron compound.

Examples of such an agent include aldehyde compounds such as formaldehyde, glyoxal and glutaraldehyde; ketone compounds such as diacetyl and cyclopentanedione; active halogen compounds such as bis(2-chloroethylurea)-2-hydroxy-4,6-dichloro-1,3,5-triazine and sodium salt of 2,4-dichloro-6-S-triazine; active vinyl compounds such as divinylsulfonic acid, 1,3-vinylsulfonyl-2-propanol, N,N'-ethylenebis(vinylsulfonylacetamide), and 1,3,5-triacryloyl-hexahydro-S-triazine; N-methylol compounds such as dimethylol urea and methylol dimethyl hydantoin; isocyanate compounds such as 1,6-hexamethylene diisocyanate; aziridine compounds such as the compounds disclosed in U.S. Patent Nos. 3,017,280 and 2,983,611; carbodiimide compounds such as the compounds disclosed in U.S. Patent No. 3,100,704; epoxy compounds such as glycerol triglycidyl ether; ethylene imino compounds such as 1,6-hexamethylene-N,N'-bisethylene urea; halogenated carboxyaldehyde compounds such as mucochloric acid and mucophenoxychloric acid; dioxane compounds such as 2,3-dihydroxydioxane; and chromium alum, potassium alum, zirconium sulfate, and chromium acetate. In the case that the boron compound is used in combination with any other cross-linking agent, the content of the boron compound in the total cross-linking agents is preferably 50% by mass or more, more preferably 70% by mass or more.

Only one kind of the above boron compounds may be used alone or two or more of the above boron compounds may be used in combination.

The boron compound to be added may be dissolved in water and/or an organic solvent to form a solution.

The concentration of the boron compound in such a solution is preferably from 0.05 to 10% by mass, particularly preferably from 0.1 to 7% by mass, based on the mass of the boron compound solution.

Water is generally used as the solvent for forming the boron compound solution. An aqueous mixed solvent may also be used which comprises an organic solvent miscible with water.

Any organic solvent capable of dissolving the boron compound may be used. Examples of such a solvent include alcohols such as methanol, ethanol, isopropyl alcohol, and glycerol; ketones such as acetone and methyl ethyl ketone; esters such as methyl acetate and ethyl acetate; aromatic solvents such as toluene; ethers such as tetrahydrofuran; and halogenated carbon solvents such as dichloromethane.

### Mordant

Preferably, a mordant is included in the colorant-receiving layer in order to improve the water resistance of the formed image and improving the anti-spreading property of the inks over time.

The mordant is preferably a cationic polymer (a cationic mordant). The mordant in the colorant-receiving layer can interact with a liquid ink containing an anionic dye as a colorant and stabilize it, so that the water resistance or anti-spreading property of the ink over time can be improved.

If the mordant is directly added to the coating liquid for forming the colorant-receiving layer, it can disadvantageously aggregate with the vapor-phase-synthesized silica, which has anionic charge. If a separate solution of the mordant is independently prepared and applied, however, there is no aggregation of the fine inorganic pigment particles. In the invention, therefore, the mordant is preferably included in any solution (for example, the solution of the cross-linking agent) that does not include the vapor-phase-synthesized silica.

Preferably, the cationic mordant is a polymeric mordant having a primary, secondary or tertiary amino group or a quaternary ammonium salt group as a cationic group. A cationic non-polymeric mordant may also be used.

Preferred examples of the polymeric mordant include homopolymers of a monomer (mordant monomer) having a primary, secondary or tertiary amino group, or a salt thereof, or a quaternary ammonium salt group, and copolymers or polycondensates of the above mordant monomer and any other monomer (hereinafter referred to as "non-mordant monomer"). These polymeric mordants may be used in any of the form of a water-soluble polymer and the form of water-dispersible latex particles.

Examples of the monomer (mordant monomer) include trimethyl-p-vinylbenzylammonium chloride, trimethyl-m-vinylbenzylammonium chloride, triethyl-p-vinylbenzylammonium chloride, triethyl-m-vinylbenzylammonium chloride, N,N-dimethyl-N-ethyl-N-p-vinylbenzylammonium chloride, N,N-diethyl-N-methyl-N-p-vinylbenzylammonium chloride, N,N-dimethyl-N-n-propyl-N-p-vinylbenzylammonium chloride, N,N-dimethyl-N-n-octyl-N-p-vinylbenzylammonium chloride, N,N-dimethyl-N-benzyl-N-p-vinylbenzylammonium chloride, N,N-diethyl-N-benzyl-N-p-vinylbenzylammonium chloride, N,N-dimethyl-N-(4-methyl)benzyl-N-p-vinylbenzylammonium chloride, N,N-dimethyl-N-phenyl-N-p-vinylbenzylammonium chloride, trimethyl-p-vinylbenzylammonium bromide, trimethyl-m-vinylbenzylammonium bromide, trimethyl-p-vinylbenzylammonium sulfonate, trimethyl-m-vinylbenzylammonium sulfonate, trimethyl-p-vinylbenzylammonium acetate, trimethyl-m-vinylbenzylammonium acetate, N,N,N-triethyl-N-2-(4-vinylphenyl)ethylammonium chloride, N,N,N-triethyl-N-2-(3-vinylphenyl)ethylammonium chloride, N,N-diethyl-N-methyl-N-2-(4-vinylphenyl)ethylammonium chloride, N,N-diethyl-N-methyl-N-2-(4-vinylphenyl)ethylammonium acetate; quaternary compounds obtained by reacting methyl chlorides, ethyl chlorides, methyl bromides, ethyl bromides, methyl iodides, or ethyl iodides with N,N-dimethylaminoethyl (meth)acrylate, N,N-diethylaminoethyl (meth)acrylate, N,N-dimethylaminopropyl (meth)acrylate, N,N-diethylaminopropyl (meth)acrylate, N,N-dimethylaminoethyl (meth)acrylamide, N,N-diethylaminoethyl (meth)acrylamide, N,N-dimethylaminopropyl (meth)acrylamide, or N,N-diethylaminopropyl (meth)acrylamide; and sulfonates, alkyl sulfonates, acetates, or alkyl carboxylates derived from the quaternary compounds by replacement of the anion.

Specific examples of such a monomer include trimethyl-2-(methacryloyloxy)ethylammonium chloride, triethyl-2-(methacryloyloxy)ethylammonium chloride, trimethyl-2-(acryloyloxy)ethylammonium chloride, triethyl-2-(acryloyloxy)ethylammonium chloride, trimethyl-3-(methacryloyloxy)propylammonium chloride, triethyl-3-(methacryloyloxy)propylammonium chloride, trimethyl-2-(methacryloylamino)ethylammonium chloride, triethyl-2-(methacryloylamino)ethylammonium chloride, trimethyl-2-(acryloylamino)ethylammonium chloride, triethyl-2-(acryloylamino)ethylammonium chloride, trimethyl-3-(methacryloylamino)propylammonium chloride, triethyl-3-(methacryloylamino)propylammonium chloride, trimethyl-3-(acryloylamino)propylammonium chloride, triethyl-3-(acryloylamino)propylammonium chloride, N,N-dimethyl-N-ethyl-2-(methacryloyloxy)ethylammonium chloride, N,N-diethyl-N-methyl-2-(methacryloyloxy)ethylammonium chloride, N,N-dimethyl-N-ethyl-3-(acryloylamino)propylammonium chloride, trimethyl-2-(methacryloyloxy)ethylammonium bromide, trimethyl-3-(acryloylamino)propylammonium bromide, trimethyl-2-(methacryloyloxy)ethylammonium sulfonate, and trimethyl-3-(acryloylamino)propylammonium acetate.

Examples of other copolymerizable monomers include N-vinylimidazole and N-vinyl-2-methylimidazole.

The term "a non-mordant monomer" refers to a monomer that does not have a basic or cationic moiety such as a primary, secondary or tertiary amino group, a salt thereof, or a quaternary ammonium salt group and exhibits no or substantially little interaction with the dye in an inkjet ink.

Examples of the non-mordant monomer include alkyl (meth)acrylates; cycloalkyl (meth)acrylates such as cyclohexyl (meth)acrylate; aryl (meth)acrylates such as phenyl (meth)acrylate; aralkyl (meth)acrylates such as benzyl (meth)acrylate; aromatic vinyl compounds such as styrene, vinyltoluene and α-methylstyrene; vinyl esters such as vinyl acetate, vinyl propionate and vinyl versatate; allyl esters such as allyl acetate; halogen-containing monomers such as vinylidene chloride and vinyl chloride; vinyl cyanides such as (meth)acrylonitrile; and olefins such as ethylene and propylene.

The alkyl (meth)acrylates preferably have 1 to 18 carbon atoms in the alkyl moiety. Examples of such alkyl (meth)acrylates include methyl (meth)acrylate, ethyl (meth)acrylate, propyl (meth)acrylate, isopropyl (meth)acrylate, n-butyl (meth)acrylate, isobutyl (meth)acrylate, tert-butyl (meth)acrylate, hexyl (meth)acrylate, octyl (meth)acrylate, 2-ethylhexyl (meth)acrylate, lauryl (meth)acrylate, and stearyl (meth)acrylate.

Particularly preferred are methyl acrylate, ethyl acrylate, methyl methacrylate, ethyl methacrylate, and hydroxyethyl methacrylate.

One kind of non-mordant monomer may be used alone or two or more kinds of non-mordant monomers may be used in combination.

Preferred examples of the polymeric mordant also include poly(diallyldimethylammonium chloride), poly(methacryloyloxyethyl-β-hydroxyethyldimethylammonium chloride), poly(ethyleneimine), polyallylamine, polyallylamine hydrochloride, polyamide-polyamine resins, cationized starch, dicyandiamide formaldehyde condensates, dimethyl-2-hydroxypropylammonium salt polymers, polyamidine, and polyvinylamine.

The polymeric mordant preferably has a weight average molecular weight of 1000 to 200000, more preferably of 3000 to 60000. If the molecular weight is in the range from 1000 to 200000, insufficient waterproof can be avoided, and worse handling property can be prevented, which would otherwise be caused by too high viscosity.

Preferred examples of the cationic non-polymeric mordant include water-soluble metal salts such as aluminum sulfate, aluminum chloride, poly aluminum chloride, and magnesium chloride.

### Compounds Represented by Formulae (1) and (2)

In the information medium of the invention, the colorant-receiving layer preferably further contains a compound represented by Formula (1) below or a compound represented by Formula (2) below or both. The compound represented by Formula (1) or (2) are high-boiling point solvents.

RO(CH₂CH₂O)ₙH Formula (1)

wherein R represents a saturated hydrocarbon group having 1 to 12 carbon atoms, an unsaturated hydrocarbon group having 1 to 12 carbon atoms, a phenyl group, or an acyl group; and n represents an integer of 1 to 3.

RO(CH₂CH(CH₃)O)ₙH Formula (2)

wherein R represents a saturated hydrocarbon group having 1 to 12 carbon atoms, an unsaturated hydrocarbon group having 1 to 12 carbon atoms, a phenyl group, or an acyl group; and n represents an integer of 1 to 3.

If in the colorant-receiving layer includes the compound of Formula (1) or the compound of Formula (2) or both, drying and shrinkage of the colorant layer are suppressed when the three-dimensional network structure (porous structure) is formed. It is estimated that the effect is produced because the compound of Formula (1) or (2) can moderately inhibit hydrogen bonding between the silanol group at the surface of the vapor-phase-synthesized silica and the hydroxyl group of the polyvinyl alcohol so that drying and shrinkage of the colorant layer can be diminished. Thus, in the process of forming the three-dimensional network, the colorant-receiving layer can be prevented from cracking, so that the production yield or quality of the information medium can be improved.

In the colorant-receiving layer, the combination of the fine particles, the polyvinyl alcohol, the boron compound, and the mordant can improve properties such as the glossiness, ink absorption characteristics, anti-spreading property of inks over time, and light fastness, printing density (maximum density).

In Formula (1) or (2), R is a saturated hydrocarbon group having 1 to 12 carbon atoms, an unsaturated hydrocarbon group having 1 to 12 carbon atoms, a phenyl group, or an acyl group, preferably a saturated hydrocarbon group having 1 to 4 carbon atoms.

The saturated hydrocarbon group has 1 to 12 carbon atoms, preferably 1 to 8 carbon atoms, more preferably 1 to 4 carbon atoms. For example, the saturated hydrocarbon group is an alkyl group, an alicyclic hydrocarbon group or the like. The saturated hydrocarbon group may have a substituent. Examples of the saturated hydrocarbon group include methyl, ethyl, propyl, butyl, and hexyl groups, and methyl, ethyl, propyl, and butyl groups are preferred.

The unsaturated hydrocarbon group has 1 to 12 carbon atoms, preferably 1 to 8 carbon atoms, more preferably 1 to 4 carbon atoms. For example, the unsaturated hydrocarbon group is an alkenyl group, an alkynyl group or the like. The unsaturated hydrocarbon group may have a substituent. Examples of the unsaturated hydrocarbon group include vinyl, allyl, ethynyl, 1,3-butadienyl, and 2-propynyl groups, and allyl group is preferred.

The acyl group preferably has 1 to 8 carbon atoms, more preferably 1 to 4 carbon atoms. The acyl group may have a substituent. Examples of the acyl group include acetyl, propionyl, butyryl, and valeryl groups, and butyryl group is preferred.

In Formula (1) or (2), n represents an integer of 1 to 3, preferably 2 or 3.

The compound represented by Formula (1) or (2) is preferably water-soluble. Herein, the wording "water-soluble" refers to having a solubility of at least 1% by mass in water. Examples of the compounds of Formulae (1) and (2) include ethylene glycol monomethyl ether, ethylene glycol monoethyl ether, ethylene glycol monobutyl ether, ethylene glycol monohexyl ether, ethylene glycol monoallyl ether, ethylene glycol monophenyl ether, diethylene glycol monomethyl ether, diethylene glycol monoethyl ether, diethylene glycol monobutyl ether, diethylene glycol monohexyl ether, diethylene glycol monododecyl ether, triethylene glycol monomethyl ether, triethylene glycol monoethyl ether, triethylene glycol monobutyl ether, propylene glycol monomethyl ether, propylene glycol monoethyl ether, and propylene glycol monobutyl ether. Preferred are diethylene glycol monobutyl ether and triethylene glycol monobutyl ether.

The colorant-receiving layer may include at least one of the compounds of Formula (1) and the compounds of Formula (2). Thus, the colorant layer may include one or more of the compounds represented by Formula (1) or (2) or both the compound of Formula (1) and the compound of Formula (2). If both the compound (x) of Formula (1) and the compound (y) of Formula (2) are used, the mixture ratio (x:y by mass) is preferably, but not limited to, from 100:1 to 100:100, more preferably from 100:10 to 100:50. The total content of the compounds of Formulae (1) and (2) in the colorant-receiving layer is preferably from 0.1 to 5.0 g/m², more preferably from 0.2 to 3.0 g/m².

### Other Components

The colorant-receiving layer may include other component as shown below as needed.

In order to suppress the degradation of the colorant, the colorant-receiving layer may include a UV absorber, an antioxidant, an anti-fading agent such as a singlet oxygen quencher, or the like.

Examples of the UV absorber include cinnamic acid derivatives, benzophenone derivatives and benzotriazolylphenol derivatives. Specific examples thereof include butyl α-cyano-phenylcinnamate. o-benzotriazole-phenol, o-benzotriazole-p-chlorophenol, o-benzotriazole-2,4-di-tert-butylphenol, and o-benzotriazole-2,4-di-tert-octylphenol. A hindered phenol compound may also be used as the UV absorber, and specifically preferred is a phenol derivative having a branched alkyl substituent on at least one of 2' and 6' positions.

Examples of the UV absorber also include a benzotriazole type UV absorber, a salicylic acid type UV absorber, a cyanoacrylate type UV absorber, and an oxalic acid anilide type UV absorber. Specific examples thereof are disclosed in JP-A Nos. 47-10537, 58-111942, 58-212844, 59-19945, 59-46646, 59-109055, and 63-53544, JP-B Nos. 36-10466, 42-26187, 48-30492, 48-31255, 48-41572, 48-54965, and 50-10726, and U.S. Patent Nos. 2,719,086, 3,707,375, 3,754,919, and 4,220,711.

A fluorescent brightening agent may also be used as the UV absorber. For example, a coumarin type fluorescent brightening agent may be used. Specific examples thereof are disclosed in JP-B Nos. 45-4699 and 54-5324.

Examples of the antioxidant include the compounds disclosed in European Patent Application Laid-Open Nos. 223739, 309401, 309402, 310551, 310552, and 459416, German Patent Application Laid-Open No. 3435443, JP-A Nos. 54-48535, 60-107384, 60-107383, 60-125470, 60-125471, 60-125472, 60-287485, 60-287486, 60-287487, 60-287488, 61-160287, 61-185483, 61-211079, 62-146678, 62-146680, 62-146679, 62-282885, 62-262047, 63-051174, 63-89877, 63-88380, 63-88381, 63-113536, 63-163351, 63-203372, 63-224989, 63-251282, 63-267594, 63-182484, 1-239282, 2-262654, 2-71262, 3-121449, 4-291685, 4-291684, 5-61166, 5-119449, 5-188687, 5-188686, 5-110490, 5-1108437, and 5-170361, JP-B Nos. 48-43295 and 48-33212, and U.S. Patent Nos. 4,814,262 and 4,980,275.

Specific examples thereof include 6-ethoxy-1-phenyl-2,2,4-trimethyl-1,2-dihydroquinoline, 6-ethoxy-1-octyl-2,2,4-trimethyl-1,2-dihydroquinoline, 6-ethoxy-1-phenyl-2,2,4-trimethyl-1,2,3,4-tetrahydroquinoline, 6-ethoxy-1-octyl-2,2,4-trimethyl-1,2,3,4-tetrahydroquinoline, nickel cyclohexanoate, 2,2-bis(4-hydroxyphenyl)propane, 1,1-bis(4-hydroxyphenyl)-2-ethylhexane, 2-methyl-4-methoxy-diphenylamine, and 1-methyl-2-phenylindole.

One anti-fading agent may be used alone or two or more anti-fading agents may be used in combination. The anti-fading agent may be in the form of an aqueous solution, a dispersion or an emulsion, or may be included in microcapsules.

The content of the anti-fading agent in the colorant-receiving layer coating liquid is preferably from 0.01 to 10% by mass.

The colorant-receiving layer may also include an inorganic salt in order to increase the dispersibility of the fine inorganic pigment particles. The layer may also include a pH control agent such as an acid or base.

The colorant-receiving layer may also include fine particles of electron-conductive metal oxide for suppressing frictional charge or peeling charge at the surface, or a mat agent for reducing surface friction property.

### Formation of Colorant-Receiving Layer

As described above, the mordant is preferably introduced into the colorant-receiving layer during the process of adding the cross-linking agent solution. In such a process, the colorant-receiving layer is preferably formed by a Wet On Wet method (WOW method) including the steps of: applying a coating liquid (a colorant-receiving layer coating liquid) that includes the fine particles, the binder, and at least one of the compound of Formula (1) and the compound of Formula (2); adding, to the coating layer, a solution (a cross-linking agent solution) that includes the cross-linking agent and the mordant, at the time of the application or before the time when the formed coating layer shows a falling drying rate during a process of drying the coating layer; and then cross-linking and curing the coating layer. In this method, the colorant-receiving layer coating liquid has a pH of 8.0 to 10.0.

Alternatively, the colorant-receiving layer of the information medium of the invention may be produced by a method comprising: simultaneously applying, to the undercoat layer, the colorant-receiving layer coating liquid, the cross-linking agent solution and a barrier liquid whose components do not react with the cross-linking agent, wherein at least one of the cross-linking agent solution and the barrier liquid includes the mordant, and the barrier liquid is sandwiched between the coating liquid and the cross-linking agent solution; and curing them.

In the invention as described above, the simultaneous application of the cross-linking agent (the boron compound) and the mordant can provide an improved water resistance to the colorant-receiving layer. If the mordant is added to the colorant-receiving layer coating liquid, the cationic mordant can aggregate with the coexisting vapor-phase-synthesized silica having anionic charge at its surface. However, if the mordant-containing solution and the colorant-receiving layer coating liquid are each independently prepared and applied, aggregation of the vapor-phase-synthesized silica does not occur, and thus, the mordant can be chosen from a wider range.

According to the invention, the colorant-receiving layer coating liquid containing at least the vapor-phase-synthesized silica, the polyvinyl alcohol and at least one of the compound of Formula (1) and the compound of Formula (2) may be prepared as described below.

The vapor-phase-synthesized silica is added to water (for example, at a concentration of 10 to 20% by mass) and dispersed by a high-speed rotation wet colloid mill (for example, CLEAR MIX manufactured by M technique Co., Ltd.), for example, at a high rotation speed of 10000 rpm (preferably of 5000 to 20000 rpm) for 20 minutes (preferably 10 to 30 minutes). An aqueous polyvinyl alcohol solution is then added thereto (for example, so as to provide PVA in an amount of about one-third of the mass of the vapor-phase-synthesized silica), and at least one of the compound of Formula (1) and the compound of Formula (2) is also added. The resulting mixture is dispersed under the same rotation conditions as shown above so that the coating liquid is prepared. The resulting coating liquid is a homogeneous sol, which is applied to the undercoat layer by the application method below to form a porous colorant-receiving layer having a three-dimensional network structure. The dispersion process may be conducted by any of various conventional dispersers such as high-speed rotation dispersers, medium-stirring type dispersers (such as ball mills and sand mills), ultrasonic dispersers, colloid mill dispersers, and high-pressure dispersers. In the invention, colloid mill dispersers and high-pressure dispersers are preferable because they can efficiently disperse aggregated fine particles.

In accordance with necessity, the colorant-receiving layer coating liquid may further include a surfactant, a pH control agent, an antistatic agent, or the like.

For example, the colorant-receiving layer coating liquid may be applied by a contact application method such as bar coating, roll coating, blade coating, screen coating, or TAMPO coating or by a noncontact application method such as spray coating, spin coating, curtain coating, or dip coating.

When the spray coating is conducted, the pressure is preferably from 1.013 to 2026 hPa, more preferably from 50.65 to 1013 hPa, still more preferably from 101.3 to 506.5 hPa; the spray spreading angle is preferably from 1 to 120°, more preferably from 10 to 60°, still more preferably from 20 to 50°; the liquid particle diameter is preferably from 0.1 to 1000 µm, more preferably from 1 to 500 µm, still more preferably from 10 to 100 µm; the distance from the work (information medium) is preferably from 1 to 1000 mm, more preferably from 10 to 200 mm, still more preferably from 30 to 100 mm; the temperature is preferably from 10 to 40°C, more preferably from 15 to 35°C, still more preferably from 20 to 30°C; and the humidity is preferably from 5 to 70%RH, more preferably from 10 to 40%RH, still more preferably from 20 to 50%RH.

When the spin coating is conducted, the coating liquid viscosity is preferably from 0.1 to 10000 mPa·s, more preferably from 1 to 6000 mPa·s, still more preferably from 10 to 3000 mPa·s; the viscosity of the first liquid (the colorant-receiving layer coating liquid) is preferably from 50 to 10000 mPa·s, more preferably from 100 to 6000 mPa·s, still more preferably from 200 to 3000 mPa·s, for the purpose of ensuring the thickness; the viscosity of the second liquid (the cross-linking agent solution) is preferably from 0.1 to 1000 mPa·s, more preferably from 1 to 500 mPa·s, still more preferably from 2 to 300 mPa·s, for the purpose of ensuring the evenness of the coating film; at the time of dispensing, the rotation speed is preferably from 10 to 1000 rpm, more preferably from 50 to 600 rpm, still more preferably from 100 to 400 rpm; at the time of spinning off, the rotation speed may gradually be increased in a stepwise manner or in a continuous manner and is preferably from 100 to 10000 rpm, more preferably from 200 to 5000 rpm, still more preferably from 300 to 3000 rpm; concerning the nozzle shape, its length is preferably from 1 to 100 mm, more preferably from 5 to 50 mm, still more preferably from 10 to 30 mm; the inner diameter of the nozzle is preferably from 0.1 to 5 mm, more preferably from 0.3 to 3 mm, still more preferably from 0.5 to 2 mm; the thickness of the nozzle is preferably from 0.1 to 1 mm, more preferably from 0.2 to 0.5 mm; the nozzle may be inclined along the flow; the distance from the work (information medium) is preferably from 0.5 to 100 mm, more preferably from 1 to 50 mm, still more preferably from 2 to 20 mm; the temperature is preferably from 10 to 40°C, more preferably from 15 to 35°C, still more preferably from 20 to 30°C; and the humidity is preferably from 5 to 70%RH, more preferably from 10 to 40%RH, still more preferably from 20 to 50%RH.

After the colorant-receiving layer coating liquid is applied, the cross-linking agent solution is added to the coating layer. The cross-linking agent solution may be added before the time when the coating layer shows a falling drying rate after the application. Specifically, after the application of the colorant-receiving layer coating liquid, the colorant-receiving layer is preferably formed through the step of introducing the boron compound and the mordant during the time period when the coating layer shows a constant drying rate.

Herein, the wording "before the time when the coating layer shows a falling drying rate" generally refers to a period of several minutes immediately after the application of the colorant-receiving layer coating liquid. During this period, the drying rate is constant; in other words, the amount of the solvent in the formed coating layer decreases in proportion to time. The period during which the constant drying rate is observed is described in Handbook of Chemical Engineering, published by Maruzen Co., Ltd., pp. 707-712, Oct. 25, 1980.

As shown above, after the application of the colorant-receiving layer coating liquid, the coating layer is dried until it shows a falling drying rate. The drying conditions are described in detail below.

The colorant-receiving layer may be dried by any drying method such as natural drying, warm air drying, infrared radiation or far infrared radiation drying, high-frequency wave drying, or oven drying.

In the case of the natural drying, the drying time of the first liquid (the colorant-receiving layer coating liquid) is preferably from 0.1 to 10000 seconds, more preferably from 1 to 1000 seconds, still more preferably from 10 to 500 seconds; the drying time of the second liquid (the cross-linking agent solution) is preferably from 1 to 10000 minutes, more preferably from 5 to 1000 minutes, still more preferably from 10 to 200 minutes; the drying temperature is preferably from 0 to 40°C, more preferably from 10 to 35°C, still more preferably from 20 to 30°C; the drying humidity is preferably from 10 to 70%RH, more preferably from 20 to 60%RH, still more preferably from 30 to 50%RH.

In the case of the warm air drying, the drying time of the first liquid is preferably from 0.1 to 5000 seconds, more preferably from 1 to 1000 seconds, still more preferably from 10 to 500 seconds; the drying temperature is preferably from 40 to 200°C, more preferably from 60 to 150°C, still more preferably from 80 to 130°C; the drying humidity is preferably from 0.01 to 50%RH, more preferably from 0.1 to 30%RH, still more preferably from 1 to 20%RH.

In the case of the infrared radiation or far infrared radiation drying, the drying time of the first liquid is preferably from 0.1 to 1000 seconds, more preferably from 1 to 500 seconds, still more preferably from 10 to 300 seconds; the drying time of the second liquid is preferably from 1 to 2000 seconds, more preferably from 10 to 1000 seconds, still more preferably from 30 to 500 seconds; the power is preferably from 10 to 2000 W, more preferably from 50 to 1500 W, still more preferably from 100 to 1000 W.

The drying conditions of the high-frequency wave drying may be the same as the conditions of the infrared radiation or far infrared radiation drying.

In the case of the oven drying, the drying time of the first liquid is preferably from 0.1 to 1000 seconds, more preferably from 1 to 500 seconds, still more preferably from 10 to 300 seconds; the drying time of the second liquid is preferably from 1 to 2000 seconds, more preferably from 10 to 1000 seconds, still more preferably from 30 to 500 seconds.

The method of the addition of the second liquid before the time when the coating layer shows a falling drying rate may be (1) a method of additionally applying the cross-linking agent solution to the coating layer, (2) a method of spraying the solution, or (3) a method of immersing the substrate with the coating layer in a cross-linking agent solution.

In the above method (1), the cross-linking agent solution may be applied by any methods such as a curtain flow coater, an extrusion die coater, an air doctor coater, a blade coater, a rod coater, a knife coater, a squeeze coater, a reverse roll coater, and a bar coater. Preferred method use coaters that are not directly brought into contact with the formed coating layer, such as an extrusion die coater, a curtain flow coater and a bar coater.

The cross-linking agent solution, which contains at least the boron compound and the mordant and will be added to the colorant-receiving layer, is preferably applied in such an amount that the amount of the provided boron compound is generally 0.01 to 10 g/m², preferably 0.05 to 5 g/m².

After the application of the cross-linking agent solution, the layer with the solution is generally heated at a temperature of 40 to 180°C for 0.5 to 30 minutes to be dried and cured. In particular, such heating is preferably performed at a temperature of 40 to 150°C for 1 to 20 minutes.

For example, when borax or boric acid is used as the boron compound in the cross-linking agent solution, the heating is performed preferably at a temperature of 60 to 100°C for 5 to 20 minutes.

Alternatively, the cross-linking agent coating liquid may be added at the time of applying the colorant-receiving layer coating liquid.

In such a case, the colorant-receiving layer coating liquid and the cross-linking agent solution are applied onto the undercoat layer at the same time (layered) in such a manner the colorant-receiving layer coating liquid is brought into contact with the undercoat layer, and then the solution and the liquid are dried and cured to form the colorant-receiving layer.

For example, the simultaneous application (multilayer application) may be conducted by an extrusion die coater or a curtain flow coater. After the simultaneous application, the formed coating layer is dried generally by being heated at a temperature of 40 to 150°C for 0.5 to 10 minutes, preferably at a temperature of 40 to 100°C for 0.5 to 5 minutes.

For example, when borax or boric acid is used as the boron compound in the cross-linking agent solution, the heating is performed preferably at a temperature of 60 to 100°C for 5 to 20 minutes.

For example, in the process of the simultaneous application (multilayer application) using an extrusion die coater, two types of coating liquids are simultaneously discharged and layered in the vicinity of the discharge port of the extrusion die coater, namely before placed on the undercoat layer, and the layered liquids are applied to the undercoat layer. When shifted toward the undercoat layer before the application, the two layered coating liquids can tend to cause a cross-linking reaction at their interface, and thus the two discharged liquids can tend to be mingled and to have an increased viscosity in the vicinity of the discharge port of the extrusion die coater, so that the application process can be hindered. In a preferred mode of the simultaneous application, therefore, the colorant-receiving layer coating liquid, the cross-linking agent solution that includes the boron compound and the mordant, and a barrier layer liquid (intermediate layer liquid) whose components do not react with the cross-linking agent are applied at the same time in a simultaneous three-layer coating manner, wherein the barrier layer is placed between the above two liquids.

Any barrier layer liquid may be chosen as long as it does not react with the boron compound and can form a liquid film. For example, the barrier layer liquid may be water or an aqueous solution including a small amount of a water-soluble resin that does not react with the boron compound. The water-soluble resin is used as a thickener or the like and is selected in view of application properties. Examples of the water-soluble resin include polymers such as hydoxypropylmethylcellulose, methylcellulose, hydroxyethylmethylcellulose, polyvinyl pyrolidone, and gelatin.

The barrier layer liquid may also include the mordant.

According to the invention, the colorant-receiving layer may also be formed by a method comprising: applying, to the surface of the undercoat layer, a coating liquid which is produced by adding a solution (first solution) including the polyvinyl alcohol, the boron compound, and at least one of the compound of Formula (1) and the compound of Formula (2) to an aqueous dispersion comprising the vapor-phase-synthesized silica and a dispersing agent and dispersing them again; adding, to the coating layer, a solution (second solution) including the boron compound and the mordant at the time of the application or adding the second solution to the formed coating layer before the time when the coating layer shows a falling drying rate during a process of drying the coating layer; and then curing the coating layer. In this method, the first solution for forming the colorant-receiving layer has a pH of 2.5 to 4.0. This method is preferably used to provide improved glossiness and improved print density.

The dispersing agent may be a cationic polymer. As shown above for the mordant, preferred examples of such a cationic polymer also include homopolymers of a monomer having a primary, secondary or tertiary amino group, or a salt thereof, or a quaternary ammonium salt group, and copolymers or polycondensates of the above monomer and any other monomer. The dispersing agent is preferably used in the form of a water-soluble polymer.

The weight average molecular weight of the dispersing agent is preferably from 1000 to 200000, more preferably from 3000 to 60000. If the molecular weight is less than 1000, its dispersion performance can be low. If the molecular weight is higher than 200000, the aqueous dispersion can have a high viscosity. The dispersing agent is preferably added in an amount of 1% to 30%, more preferably of 3% to 20%, based on the amount of the vapor-phase-synthesized silica. If the addition amount is less than 1%, its dispersion performance can be low. An addition amount of more than 30% can cause a reduction in color density at the time when a picture is printed on the colorant-receiving layer, and thus is not preferred.

The process of preparing the aqueous dispersion comprising the vapor-phase-synthesized silica and the dispersing agent may comprise: preparing an aqueous dispersion of the vapor-phase-synthesized silica; and adding the aqueous dispersion to an aqueous solution of the dispersing agent, or adding the aqueous solution of the dispersing agent to the aqueous dispersion of the vapor-phase-synthesized silica, or simultaneously mixing them. In place of the aqueous dispersion of the vapor-phase-synthesized silica, a vapor-phase-synthesized silica power may be used and added to the aqueous solution of the dispersing agent.

After the vapor-phase-synthesized silica is mixed with the dispersing agent, the mixture may be finely dispersed by a dispersing machine to form an aqueous dispersion with an average particle diameter of 50 to 300 nm. Such a dispersion may be produced using any conventional dispersing machine such as a high-speed rotation disperser, a medium-stirring type disperser (such as a ball mill and a sand mill), an ultrasonic disperser, a colloid mill disperser, or a high-pressure disperser. The colloid mill disperser and the high-pressure disperser are preferable because they can efficiently disperse formed aggregated fine particles.

In each process, water, an organic solvent or a mixture thereof may be used as the solvent. Examples of the organic solvent capable of being used in the application include alcohols such as methanol, ethanol, n-propanol, isopropanol, and methoxypropanol; ketones such as acetone and methyl ethyl ketone; and tetrahydrofuran, acetonitrile, ethyl acetate, and toluene.

After formed on the undercoat layer, the colorant-receiving layer is allowed to pass between roll nips of a supercalender, a gloss calender or the like under heat and pressure. Such a calendering process can improve surface smoothness, glossiness, transparency, and coating film strength. However, the calendering process can cause a reduction in porosity (thus can degrade ink absorption characteristics). Therefore, the conditions of the calendering process should be such conditions that the porosity does not decrease much.

In the calendering process, the roll temperature is preferably from 30 to 150°C, more preferably from 40 to 100°C; and the linear pressure between the rolls is preferably from 50 to 400 kg/cm, more preferably from 100 to 200 kg/cm.

In inkjet recording, the colorant-receiving layer should have an enough absorption capacity to absorb all droplets. Thus, the thickness of the colorant-receiving layer should be determined in connection with the porosity of the layer. For example, in the case of an ink amount of 8 nl/mm² and a porosity of 60%, the thickness of the layer should be about 1 µm or more.

From this point of view, the colorant-receiving layer for use in inkjet recording preferably has a thickness of 1 to 200 µm, more preferably of 5 to 100 µm, still more preferably from 10 to 60 µm.

The pore diameter of the colorant layer is preferably from 0.005 to 0.030 µm, more preferably from 0.01 to 0.025 µm, in terms of median diameter.

The porosity and the pore median diameter may be measured with a mercury porosimeter (PORESIZER 9320-PC2 (trade name) manufactured by Shimadzu Corporation).

Preferably, the colorant-receiving layer has high transparency. The colorant-receiving layer preferably has a haze value of 30% or less, more preferably of 20% or less, when formed on a transparent support film.

The haze value may be measure by a haze meter (HGM-2DP (trade name) manufactured by Suga Test Instrument Co., Ltd.).

When the colorant-receiving layer includes the fine particles, polyvinyl alcohol, the boron compound, and the mordant as described above, drying shrinkage of the colorant-receiving layer can be suppressed in the process of forming the porous structure, so that film cracking can be prevented, and adhesion between the undercoat layer and the colorant-receiving layer can be improved, without reducing the ink-receiving performance. When the colorant-receiving layer includes the vapor-phase-synthesized silica and has a three-dimensional network structure with a porosity of 50 to 80%, it can show good ink-absorption characteristics and form images with high resolution and high density; spreading of inks over time can be suppressed in an environment of high temperature and high moisture; the formed image can have high light-fastness and high water-resistance; and good ink-receiving performance can be ensured at the same time.

The information medium provided according to the invention can have a glossiness of 30% or more at 60°. The glossiness may be measured by a digital variable-angle glossmeter (UGV-50DP (trade name) manufactured by Suga Test Instrument Co., Ltd.) or the like.

As described above, the colorant-receiving layer of the information medium of the invention differs from that made of a UV curing resin and can reduce the amount of UV radiation applied to the information medium and can improve recording characteristics such as jitter. The colorant-receiving layer of the information medium of the invention does not cause a skin irritation, which is caused by UV curing resins. Therefore, the colorant-receiving layer is safer at handling.

An inkjet recording sheet can have defects such as cracking when a high bending force is applied to it. However, the information medium of the invention may comprise a substrate thicker than the inkjet recording sheet as described below and thus can be tough even when an external stress such as a bending force is applied.

### Intermediate Layer

The information medium of the invention may comprise an intermediate layer between the colorant-receiving layer and the undercoat layer. If the intermediate layer has high ink-absorption characteristics, the amount of acceptable ink can be increased so that color density can be increased at the time of printing and that image quality can be improved. Alternatively, the intermediate layer may be provided between the substrate and the undercoat layer. In such a case, adhesion between the undercoat layer and the substrate can be improved, or the entire warp of the information medium can be controlled.

The thickness of the intermediate layer is preferably from 0.1 to 100 µm, more preferably from 1 to 50 µm, most preferably from 3 to 20 µm.

### Surface Layer

The information medium of the invention may comprise a surface layer on the colorant-receiving layer. The surface layer can improve the surface strength or the storage stability of the print. The surface layer need have the property of receiving ink or rapidly transmitting ink.

The thickness of the surface layer is preferably from 0.01 to 100 µm, more preferably from 0.1 to 10 µm, most preferably from 0.5 to 5 µm.

A description is provided below of the substrate and each layer for use in the invention. The layer compositions and structures, materials, and the like are shown below only for the purpose of illustration. Therefore, the invention is by no means limited to the examples.

### Substrate

The substrate may be arbitrarily selected from various materials used for conventional optical recording medium substrates.

Examples of such materials include glass; polycarbonates; acrylic resins such as poly(methyl methacrylate); vinyl chloride resins such as poly(vinylchloride) and vinylchloride copolymers; epoxy resins; amorphous polyolefins; polyesters; and metals such as aluminum. Two or more of these materials may be used in combination.

Of these materials, amorphous polyolefins and polycarbonates are preferred, and polycarbonates are particularly preferred, from the viewpoint of moisture resistance, dimensional stability, low cost, or the like. The thickness of the substrate is preferably from 0.5 to 1.2 mm, more preferably from 0.6 to 1.1 mm.

The substrate has guide grooves for tracking or irregularities (pre-grooves) which represent information such as address signals.

In the case of a blue-violet laser beam-recording medium, the track pitch of the pre-groove is preferably in the range from 200 to 800 nm, more preferably from 200 to 500 nm, still more preferably from 200 to 400 nm.

The depth of the pre-groove (groove depth) is preferably in the range from 10 to 180 nm, more preferably from 20 to 150 nm.

The half width of the pre-groove is preferably in the range from 200 to 400 nm, more preferably from 230 to 380 nm, still more preferably from 250 to 350 nm.

In the case of DVD-R or DVD-RW, the track pitch of the pre-groove is preferably in the range from 300 to 900 nm, more preferably from 350 to 850 nm, still more preferably from 400 to 800 nm.

The depth of the pre-groove (groove depth) is preferably in the range from 100 to 160 nm, more preferably from 120 to 150 nm, still more preferably from 130 to 140 nm.

The half width of the pre-groove is preferably in the range from 200 to 400 nm, more preferably from 230 to 380 nm, still more preferably from 250 to 350 nm.

In the case of CD-R or CD-RW, the track pitch of the pre-groove is preferably in the range from 1.2 to 2.0 µm, more preferably from 1.4 to 1.8 µm, still more preferably from 1.55 to 1.65 µm.

The depth of the pre-groove (groove depth) is preferably in the range from 100 to 250 nm, more preferably from 150 to 230 nm, still more preferably from 170 to 210 nm.

The half width of the pre-groove is preferably in the range from 400 to 650 nm, more preferably from 480 to 600 nm, still more preferably from 500 to 580 nm.

### Recording Layer

In the case of CD-R or DVD-R, the recording layer may be formed by a process comprising: dissolving a dye, which is a recording material, a binder and the like in an appropriate solvent to form a coating liquid; then applying the coating liquid to the pre-groove side surface of the substrate by spin coating to form a coating film; and then drying the coating film.

In the process of spin coating, the temperature is preferably set at 23°C or higher, more preferably at 25°C or higher. The temperature has no specific upper limit, but should be lower than the flash point of the solvent and preferably has an upper limit of 35°C.

The dye may be a cyanine dye, an oxonol dye, a metal complex dye, an azo dye, a phthalocyanine dye, or the like, and is preferably a phthalocyanine dye.

Also preferred are the dyes as disclosed in JP-A Nos. 4-74690, 8-127174, 11-53758, 11-334204, 11-334205, 11-334206, 11-334207, 2000-43423, 2000-108513, and 2000-158818.

Examples of the solvent in the coating liquid include esters such as butyl acetate, ethyl lactate and 2-methoxyehtyl acetate; ketones such as methyl ethyl ketone, cyclohexanone, and methyl isobutyl ketone; chlorinated hydrocarbons such as dichloromethane, 1,2-dichloroethane and chloroform; amides such as dimethylformamide; hydrocarbons such as methylcyclohexane; ethers such as tetrahydrofuran, ethyl ether and dioxane; alcohols such as ethanol, n-propanol, isopropanol, n-butanol, and diacetone alcohol; fluoro-solvents such as 2,2,3,3-tetrafluoropropanol; and glycol ethers such as ethylene glycol monomethyl ether, ethylene glycol monoethyl ether and propylene glycol monomethyl ether.

One solvent may be used alone or two or more solvents may be used in combination in view of the solubility of the recording material to be used. The coating liquid may also include an additive such as an antioxidant, a UV absorber, a plasticizer, or a lubricant, depending on the purpose.

Examples of the binder include natural organic polymer materials such as gelatin, cellulose derivatives, dextran, rosin, and rubber; and synthetic organic polymers including hydrocarbon resins such as polyethylene, polypropylene, polystyrene, and polyisobutylene; vinyl resins such as polyvinyl chloride, polyvinylidene chloride, polyvinyl chloride-polyvinyl acetate copolymers; acrylic resins such as poly(methyl acrylate) and poly(methyl methacrylate); and polyvinyl alcohol, chlorinated polyethylene, epoxy resins, butyral resins, rubber derivatives, and initial condensates of thermosetting resins such as phenol-formaldehyde resins. When the binder is included in the recording layer, its amount is generally 0.01 to 50 times (by mass), preferably 0.1 to 5 times (by mass) the amount of the recording material. In the coating liquid prepared as shown above, the concentration of the recording material is generally from 0.01 to 10% by mass, preferably from 0.1 to 5% by mass.

The application may be performed by spin coating as described above, in which any conventional apparatus may be used.

The recording layer may be monolayer or multilayer. The thickness of the recording layer is generally in the range from 20 to 500 nm, preferably from 30 to 300 nm, more preferably from 50 to 100 nm.

The recording layer may contain an anti-fading agent so as to have improved light-fastness.

A singlet oxygen quencher is generally used as the anti-fading agent. Examples of the singlet oxygen quenchers are disclosed in publications such as patent specifications.

Specific examples thereof include the quenchers disclosed in JP-A Nos. 58-175693, 59-81194, 60-18387, 60-19586, 60-19587, 60-35054, 60-36190, 60-36191, 60-44554, 60-44555, 60-44389, 60-44390, 60-54892, 60-47069, 63-209995, and 4-25492, JP-B Nos. 1-38680 and 6-26028, German Patent No. 350399, and Journal of the Chemical Society of Japan, October 1992, page 1141.

The anti-fading agent such as the singlet oxygen quencher may be used in an amount of generally from 0.1 to 50% by mass, preferably from 0.5 to 45% by mass, more preferably from 3 to 40% by mass, particularly preferably from 5 to 25% by mass, based on the amount of the dye.

In the case of CD-RW or DVD-RW, the recording layer preferably comprises a phase-changeable optical-recording material that can take two states of the crystalline state and amorphous state and at least comprises Ag, Al, Te, or Sb. Such a recording layer may be provided by a known method.

If desired, any known dielectric layer may be formed on the recording layer.

### Light-Reflecting Layer

After the recording layer is formed, a light-reflecting material may be vapor-deposited, sputtered, or ion-plated on the recording layer to form a light-reflecting layer. When such a light-reflecting layer is formed, a mask is generally used to control the region at which the light-reflecting layer is to be formed.

The light-reflecting layer should comprise a light-reflecting material having high reflectivity to laser beam. The reflectivity is preferably 70% or higher.

Examples of the light reflecting material having high reflectivity include metals and semimetals such as Mg, Se, Y, Ti, Zr, Hf, V, Nb, Ta, Cr, Mo, W, Mn, Re, Fe, Co, Ni, Ru, Rh, Pd, Ir, Pt, Cu, Ag, Au, Zn, Cd, Al, Ga, In, Si, Ge, Te, Pb, Po, Sn, and Bi; and stainless steel. One light-reflecting material may be used alone, or two or more light-reflecting materials may be used in combination, or an alloy of two or more light-reflecting materials may be used. Preferred are Cr, Ni, Pt, Cu, Ag, Au, Al and stainless steel. Au, Ag, Al, and alloys thereof are particularly preferred. Au, Ag and alloys thereof are most preferred.

The thickness of the light-reflecting layer is generally in the range from 10 to 300 nm, preferably from 50 to 200 nm.

### Protective Layer or Protects Substrate

After the light-reflecting layer is provided, a protective layer may be provided on it.

The protective layer may be formed by spin coating. The spin coating method can form the protective layer without causing damage (such as dissolution of the dye and a chemical reaction between the dye and a component in the protective layer) to the recording layer. In the process of spin coating, the number of revolutions is preferably from 50 to 8000 rpm, more preferably from 100 to 5000 rpm in order to form a uniform layer and to prevent damage to the recording layer.

The protective layer may be produced with a radiation curing resin (a UV curing resin). Such a process may comprise forming the protective layer by spin coating and then applying UV radiation to the protective layer from a UV radiation lamp (a metal halide lamp) above the layer to cure the UV curing resin.

A process for the purpose of eliminating thickness irregularities may be conducted such a process of allowing the protective layer to stand for a certain period before the resin is cured.

The protective layer prevents the entry of water or the generation of defects. The protective layer is preferably includes a radiation curing resin, a visible-light-curable resin, a thermosetting resin, silicon dioxide, or the like, particularly preferably a radiation curing resin. Specific examples of the radiation curing resin include UV curing resins such as SD-40 manufactured by Dainippon Ink and Chemicals, Incorporated. Also applicable are SD-347 (manufactured by Dainippon Ink and Chemicals, Incorporated), SD-694 (manufactured by Dainippon Ink and Chemicals, Incorporated) and SKCD1051 (manufactured by SKC Co., Ltd.). The thickness of the protective layer is preferably in the range from 1 to 200 µm, more preferably from 50 to 150 µm.

If the protective layer serves as a laser beam path, it need have transparency. Herein, the wording "transparency" means that it is transparent in such a degree that it transmits a recording beam and a reproduction beam (its transmittance: 90% or higher).

In the case of DVD-R or DVD-RW, a bonding layer comprising a UV-curable layer or the like and a protective substrate (having a thickness of about 0.6 mm and made of the same material as the above substrate) are layered in place of the protective layer.

Specifically, after the formation of the light-reflecting layer, the UV curing resin (such as SD640 manufactured by Dainippon Ink and Chemicals, Incorporated) is applied in a thickness of 20 to 60 µm by spin coating to form the bonding layer. A substrate that serves as the protective substrate such as a polycarbonate substrate (with a thickness of 0.6 mm) is placed on the formed bonding layer and bonded by curing the UV curing resin with UV radiation applied to the substrate from above.

In this way, an information medium is manufactured which comprises a layered structure including the substrate and the following layers provided on the substrate: the recording layer, the light-reflecting layer, and one of (a) the protective layer and (b) the bonding layer and the protective substrate (a dummy substrate).

By properly determining the track pitch of the pre-groove formed on the substrate or the material for the recording layer, the information medium of the invention may be used as an information medium which has a track pitch narrower than that of a conventional DVD or the like and on which information can be recorded and reproduced with a laser beam having a wavelength shorter than that of the laser beam used for conventional DVD or the like.

The thickness of the information medium of the invention has a lower limit of preferably 0.3 mm, more preferably 0.5 mm, still more preferably 0.7 mm, and a upper limit of preferably 100 mm, more preferably 20 mm, still more preferably 5 mm. If the medium is too thin, defects can be caused by bending. If too thick, it can have poor removability.

### EXAMPLES

The invention is more specifically described by means of the examples below, which are not intended to limit the scope of the present invention. In the examples, "parts" and "%" always mean "parts by mass" and "% by mass," respectively.

### Example 1

### Preparation of Substrate Disc

A polycarbonate resin substrate disc was prepared by a process comprising: charging a polycarbonate resin (PANLITE AD5503 (trade name) manufactured by Teijin Limited) into an injection molding machine in which a stamper for forming a specific groove with a specific track pitch was loaded; and molding it at a temperature of 115°C. The resulting resin substrate disc was 120 mm in diameter and 1.2 mm in thickness and had, on its surface, a spiral groove (pre-groove) with a track pitch of 1.6 µm, a width of 500 nm and a depth of 180 nm.

A coating liquid for forming a recording layer was prepared by dissolving 2.5 g of a cyanine dye represented by the structural formula below in 100 ml of 2,2,3,3-tetrafluoropropanol. The coating liquid was applied to the pre-groove side surface of the polycarbonate substrate disc by spin coating to form a dye recording layer with thicknesses of 190 nm (at the groove part) and 110 nm (at the land part).

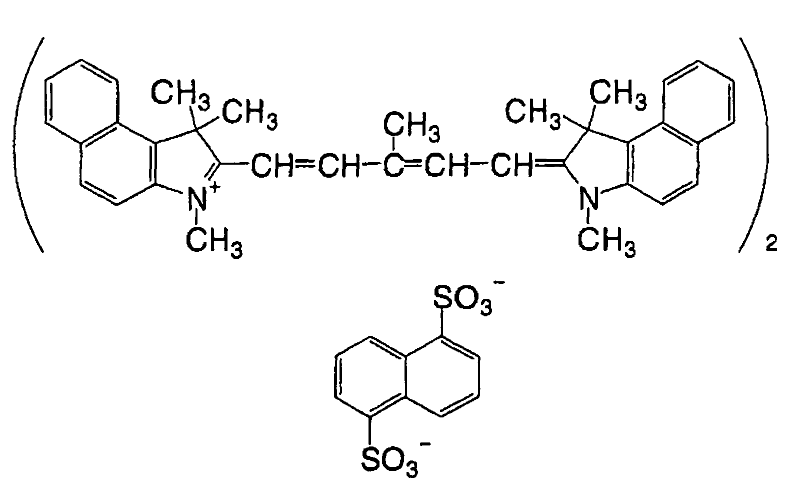

Ag was then sputtered on the dye recording layer by a DC magnetron sputtering system to form a Ag reflecting layer with a thickness of about 120 nm. A UV curing resin (SD318 (trade name) manufactured by Dainippon Ink and Chemicals, Incorporated) was then applied to the reflecting layer by spin coating at rotation speeds varying in the range of 300 to 4000 rpm. After the application, UV light was applied from above the resin layer by using a high pressure mercury lamp to cure it so that a 5 µm thick protective layer was formed. As the result of the above process, a CD-R type information medium (an optical disc) was produced which comprised the substrate, the dye recording layer, the reflecting layer, and the protective layer.

A printable layer was then formed on the protective layer, which was opposite to the face on the incident recording/ reproduction laser beam side.

A UV-curable ink (WHITE No. 3 manufactured by Teikoku Printing Inks Mfg. Co., Ltd.) was printed by screen printing on the protective layer opposite to the substrate surface and then was cured by being irradiated with 80 W/cm UV light from a metal halide lamp above the substrate to form a 8 µm thick undercoat layer (white layer). The undercoat layer was formed again to form a two-layer undercoat with a total thickness of 16 µm. The screen used was a Tetoron screen with 300 threads per inch mesh, a thread diameter of 31 µm and an opening of 38 µm.

The steps below were then conducted to form a colorant-receiving layer on the undercoat layer.

### Preparation of Colorant-Receiving Layer Coating Liquid

According to the composition below, colorant-receiving layer coating liquid A was prepared by a process comprising: mixing (1) fine vapor-phase-synthesized silica particles and (2) ion exchange water; dispersing the particles at a rotation speed of 10000 rpm for 20 minutes by means of a high-speed rotation colloid mill (CLEAR MIX manufactured by M technique Co., Ltd.); then adding thereto (3) polyoxyethylene lauryl ether, (4) aqueous ammonia, (5) an aqueous solution of 9% polyvinyl alcohol, and (6) diethylene glycol monobutyl ether; and dispersing them under the same conditions as described above.

The mass ratio of the fine silica particles to the water-soluble resin (PB ratio of (1):(5)) was 3.5:1, and colorant-receiving layer coating liquid A had a pH of 9.5.

### Composition of Colorant-Receiving Layer Coating Liquid A

| | |
|---|---|
| (1) Fine vapor-phase-synthesized silica particles (fine inorganic pigment particles) | 9.9 parts |
| (7 nm in average primary particle diameter, AEROSIL 300 manufactured by Nippon Aerosil Co., Ltd.) | |
| (2) Ion exchange water | 72.6 parts |
| (3) Polyoxyethylene lauryl ether (surfactant) | 7.2 parts |
| (EMULGEN 109P (10%) with an HLB value of 13.6 manufactured by Kao Corporation) | |
| (4) 17 g/l aqueous ammonia solution (pH control agent) | 5.3 parts |
| (5) Aqueous solution of 9% polyvinyl alcohol (water-soluble resin) | 31.4 parts |
| (PVA 420 with a saponification degree of 81.8% and a polymerization degree of 2000 manufactured by Kuraray Co., Ltd.) | |
| (6) Diethylene glycol monobutyl ether | 0.6 part |
| (the compound represented by Formula (1)) | |

### Formation of Colorant-Receiving Layer

After the surface of the undercoat layer of the information medium was subjected to corona discharge treatment, the colorant-receiving layer coating liquid A was applied in an amount of 100 ml/m² to the surface of the undercoat layer with a bar coater and dried with a hot air dryer at 80°C (at an air speed of 3 to 8 m/sec) until the coating layer had a solids concentration of 20%. During this period, the coating layer showed a constant drying rate. Immediately thereafter, cross-linking agent solution A having the composition below was applied onto the applied colorant-receiving layer coating liquid A with a bar coater and dried at 80°C for 5 minutes. In this way, an information medium of Example 1 was produced having a colorant-receiving layer with a dry film thickness of 30 µm.

### Composition of Cross-Linking Agent Solution A

· Boric acid (6%, cross-linking agent) 25 parts
· Aqueous solution of PAS-F5000 (20%) 7.15 parts

### (A mordant manufactured by Nitto Boseki Co., Ltd.)

· Ion exchange water 68.98 parts
· Ammonium chloride (surface pH control agent) 0.2 parts
· Aqueous ammonia solution (25%, pH control agent) 1.67 parts
· Polyoxyethylene lauryl ether (surfactant) 2 parts

### (EMULGEN 109P (10%) with an HLB value of 13.6 manufactured by Kao Corporation)

### Example 2

A polycarbonate substrate (0.6 mm in thickness, 120 mm in outer diameter and 15 mm in inner diameter) having a spiral groove (land) and LPPs (land pre-pits) on its surface was prepared by injection molding of a polycarbonate resin (PANLITE AD5503 (trade name) manufactured by Teijin Limited). The groove had a depth of 140 nm, a width of 310 nm and a pitch of 740 nm.

Oxonol dyes (A) and (B) as shown below were mixed in a ratio of 65:35, and 1 g of the mixture was dissolved in 100 ml of 2,2,3,3-tetrafluoropropanol to form a coating liquid for forming a recording layer. This coating liquid was applied to the groove side surface of the resulting substrate by spin coating at rotation speeds varying in a range of 300 to 3000 rpm and dried to form a recording layer. The thickness of the recording layer was measured through SEM observation of its section and found to be 150 nm (at the groove part) and 110 nm (at the land part).

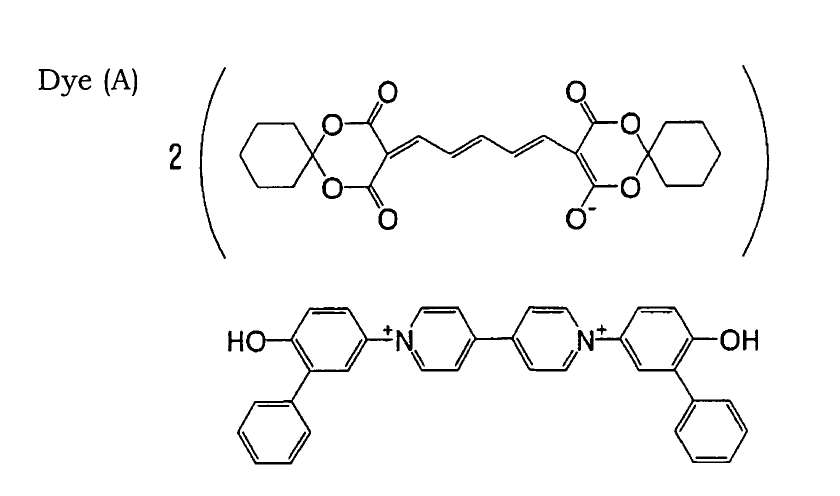

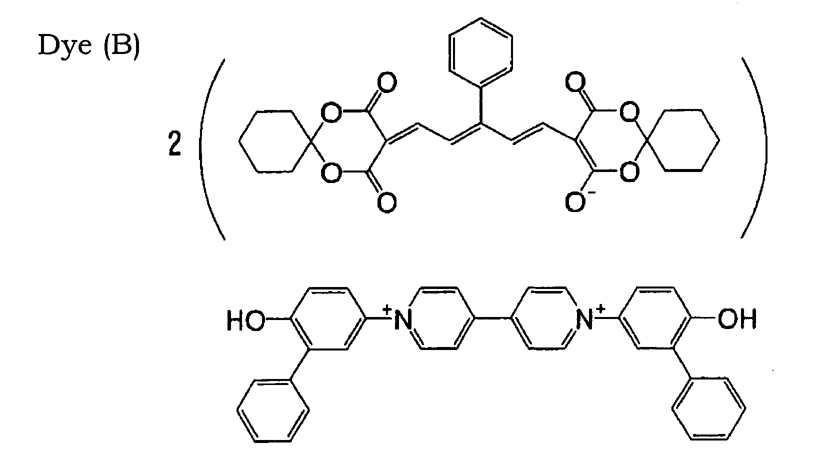

In an argon atmosphere, a Ag reflecting layer with a thickness of about 150 nm was provided on the recording layer by DC sputtering under a pressure of 0.5 Pa in the chamber.

An UV curing resin (SD-318 (trade name) manufactured by Dainippon Ink and Chemicals, Incorporated) was then dispensed in a circular form on the reflecting layer. Then, a separately-prepared polycarbonate protective substrate disc (120 mm in diameter and 0.6 mm in thickness) was laminated on the UV curing resin in such a manner that both centers of the disks were matched. The laminate was spun at a rotation speed of 5000 rpm for 3 seconds, and a UV curing resin (SD640 manufactured by Dainippon Ink and Chemicals, Incorporated) was spread over the surface, while excessive UV curing resin was spun off. When the UV curing resin was spread over the surface, UV light was applied from a high-pressure mercury lamp to cure the UV curing resin. Thus, the substrate with the recording layer and the reflecting layer was bonded to the protective substrate disc through a 25 µm thick bonding layer without air bubbles entrained therein.

In the same manner as Example 1, an undercoat layer and a colorant-receiving layer were provided on the protective layer opposite to the substrate surface, so that an information medium of Example 2 was produced.

### Example 3

An information medium of Example 3 was produced in the same manner as Example 1 except that the undercoat layer had a thickness of 25 µm.

### Example 4

An information medium of Example 4 was produced in the same manner as Example 1 except that the undercoat layer had a thickness of 50 µm.

### Comparative Example 1

An information medium of Comparative Example 1 was produced in the same manner as Example 1 except that the colorant-receiving layer was formed by a process comprising screen-printing a UV curing resin (UV SP 81019B (trade name) manufactured by Teikoku Printing Inks Mfg. Co., Ltd.) and curing the resin with UV light.

### Comparative Example 2

An information medium of Comparative Example 2 was produced in the same manner as Example 1 except that the thickness of the undercoat layer was 8 µm.

### Performance Evaluation

The resulting information media of Examples 1 to 4 and Comparative Examples 1 and 2 were evaluated as shown below.

### Measurement of Lightness L*

The printable layer of each of the information media of Examples 1 to 4 and Comparative Examples 1 and 2 were measured for lightness L* by using a Minolta colorimeter (CR-300) with a light source mode of D65. The results of the measurement are shown in Table 1.

### Printing

An image was printed on the printable layer of each of the information media of Examples 1 to 4 and Comparative Examples 1 and 2 by using an inkjet printer (PM-970C (trade name) manufactured by Seiko Epson Corporation).

### Evaluation of Image quality

Sensory evaluation was visually conducted by 10 testers on the image printed on each of the information media of Examples 1 to 4 and Comparative Examples 1 and 2. The evaluation mark o was assigned when all the 10 testers stated that the print was better than the conventional print. The evaluation mark × was assigned when all the 10 testers stated that the print was equal to or worse than the conventional print. The results are also shown in Table 1.

**Table 1**

| | Thickness of Undercoat Layer (µm) | L* | Image quality |
|---|---|---|---|
| Example 1 | 16 | 91 | ○ |
| Example 2 | 16 | 93 | ○ |
| Example 3 | 25 | 94 | ○ |
| Example 4 | 50 | 95 | ○ |
| Comparative Example 1 | 16 (As Colorant-Receiving Layer) | 87 | × |
| Comparative Example 2 | 8 | 89 | × |

Table 1 indicates that the printable layer of each of the information media of Examples 1 to 4 had a L* value of at least 90 and thus had a high lightness, while the printable layer of each of the information media of Comparative Examples 1 and 2 had a L* value of less than 90 and had an insufficient lightness. With regard to the quality of the printed image, the information media of Examples 1 to 4 each provided a high resolution and fine textures, and a single hair was able to be printed sharply. In contrast, the information media of Comparative Examples 1 and 2 each provided a low print quality and a low resolution and were not able to reproduce fine textures.

### Example 5

In the same manner as Example 1, a polycarbonate resin substrate disc was prepared by a process comprising: charging a polycarbonate resin (PANLITE AD5503 (trade name) manufactured by Teijin Limited) into an injection molding machine in which a stamper for forming a specific groove with a specific track pitch was loaded; and molding it at a temperature of 115°C. The resulting resin substrate disc was 120 mm in diameter and 1.2 mm in thickness and had, on its surface, a spiral groove (pre-groove) with a track pitch of 1.6 µm, a width of 500 nm and a depth of 180 nm. The same process as described above was then carried out to form a CD-R type information medium (an optical disc) which comprised the substrate, the dye recording layer, the reflecting layer, and the protective layer. A printable layer was then provided on the surface of the protective layer, which was opposite to the incident recording/reproduction laser beam side.

A UV-curable ink (White No. 3, manufactured by Teikoku Printing Inks Mfg. Co., Ltd.) was printed by screen printing on the protective layer opposite to the front surface of the substrate and then cured by applying 80 W/cm UV light from a metal halide lamp above the substrate to form a 8 µm thick undercoat layer (white layer). The undercoat layer was formed again to form a two-layer undercoat (comprising a smoothing layer and a chromaticity control layer in this order) with a total thickness of 16 µm. The screen used was a Tetoron screen with 300 threads per inch mesh, a thread diameter of 31 µm and an opening of 38 µm.

The smoothing layer had a glossiness of 40% at 45°. The process of forming the chromaticity control layer comprised: previously adding a pigment (violet) to the UV-curable ink in such a manner that the surface of the undercoat layer had a chromaticity a* value of 0.1 and a chromaticity b* value of -2.0; and screen-printing the UV-curable ink.

The steps below were then conducted to provide a colorant-receiving layer on the undercoat layer.

### Preparation of Colorant-Receiving Layer Coating Liquid

According to the composition below, colorant-receiving layer coating liquid A was prepared by a process comprising: mixing (1) fine vapor-phase-synthesized silica particles and (2) ion exchange water; dispersing the particles at a rotation speed of 10000 rpm for 20 minutes by means of a high-speed rotation colloid mill (CLEAR MIX manufactured by M technique Co., Ltd.); then adding thereto (3) polyoxyethylene lauryl ether, (4) aqueous ammonia, (5) an aqueous solution of 9% polyvinyl alcohol, and (6) diethylene glycol monobutyl ether; and dispersing them under the same conditions as described above.

The mass ratio of the fine silica particles to the water-soluble resin (PB ratio of (1):(5)) was 3.5:1, and colorant-receiving layer coating liquid A was had a pH of 9.5.

### Composition of Colorant-Receiving Layer Coating Liquid A

| | |
|---|---|
| (1) Fine vapor-phase-synthesized silica particles (fine inorganic pigment particles) | 9.9 parts |
| (7 nm in average primary particle diameter, AEROSIL 300 manufactured by Nippon Aerosil Co., Ltd.) | |
| (2) Ion exchange water | 72.6 parts |
| (3) Polyoxyethylene lauryl ether (surfactant) | 7.2 parts |
| (EMULGEN 109P (10%) with an HLB value of 13.6 manufactured by Kao Corporation) | |
| (4) 17 g/l aqueous ammonia solution (pH control agent) | 5.3 parts |
| (5) Aqueous solution of 9% polyvinyl alcohol (water-soluble resin) | 31.4 parts |
| (PVA 420 with a saponification degree of 81.8% and a polymerization degree of 2000 manufactured by Kuraray Co., Ltd.) | |
| (6) Diethylene glycol monobutyl ether | 0.6 parts |
| (the compound represented by Formula (1)) | |

### Formation of Colorant-Receiving Layer

After the surface of the undercoat layer of the information medium was subjected to corona discharge treatment, the resulting colorant-receiving layer coating liquid A was applied in an amount of 100 ml/m² to the surface of the undercoat layer with a bar coater and dried with a hot air dryer at 80°C (at an air speed of 3 to 8 m/ sec) until the coating layer had a solids concentration of 20%. During this time period, the coating layer showed a constant drying rate. Immediately thereafter, cross-linking agent solution A having the composition below was applied onto the applied colorant-receiving layer coating liquid A with a bar coater and dried at 80°C for 5 minutes. Thus, an information medium of Example 5 was produced having a colorant-receiving layer with a dry film thickness of 30 µm.

### Composition of Cross-Linking Agent Solution A

| | |
|---|---|
| Boric acid (6%, cross-linking agent) | 25 parts |
| Aqueous solution of PAS-F5000 (20%) | 7.15 parts |
| (A mordant manufactured by Nitto Boseki Co., Ltd.) | |
| Ion exchange water | 68.98 parts |
| Ammonium chloride (surface pH control agent) | 0.2 parts |
| Aqueous ammonia solution (25%, pH control agent) | 1.67 parts |
| Polyoxyethylene lauryl ether (surfactant) | 2 parts |
| (EMULGEN 109P (10%) with an HLB value of 13.6 manufactured by Kao Corporation) | |

### Example 6

In the same manner as Example 5, a polycarbonate substrate was prepared, and the coating liquid was prepared and applied to form a recording layer. The thickness of the recording layer was measured through SEM observation of its section and found to be 150 nm (at the groove part) and 110 nm (at the land part).

In an argon atmosphere, a Ag reflecting layer with a thickness of about 150 nm was formed on the recording layer by DC sputtering under a pressure of 0.5 Pa in the chamber.

An UV curing resin (SD-318 (trade name) manufactured by Dainippon Ink and Chemicals, Incorporated) was then dispensed in a circular form on the reflecting layer. A separately-prepared polycarbonate protective substrate disc (120 mm in diameter and 0.6 mm in thickness) was laminated on the UV curing resin in such a manner that both centers of the disks were matched. The laminate was spun at a rotation speed of 5000 rpm for 3 seconds, and a UV curing resin (SD640 manufactured by Dainippon Ink and Chemicals, Incorporated) was spread over the surface, while excessive UV curing resin was spun off. When the UV curing resin was spread over the surface, UV light was applied from a high-pressure mercury lamp to cure the UV curing resin. In this way, the substrate with the recording layer and the reflecting layer was bonded to the protective substrate disc through a 25 µm thick bonding layer without air bubbles entrained therein.

In the same manner as Example 5, an undercoat layer and a colorant-receiving layer were provided on the protective substrate opposite to the incident recording/reproduction laser beam side, so that an information medium of Example 6 was produced. In this example, a UV-curable ink (a mixture of WHITE No. 3 manufactured by Teikoku Printing Inks Mfg. Co., Ltd. and yellow ink) was used for the smoothing layer so that the surface of the smoothing layer had a glossiness of 30% at 45°, and a pigment (indigo) was added so that the surface of the undercoat layer had an a* value of 3.0 and a b* value of -5.0.

### Example 7

An information medium of Example 7 was produced in the same manner as Example 5, except that a UV-curable ink (a mixture of WHITE No. 3 manufactured by Teikoku Printing Inks Mfg. Co., Ltd. and yellow ink) was used for the smoothing layer so that the surface of the smoothing layer had a glossiness of 35% at 45°; and that a pigment (indigo) was added so that the surface of the undercoat layer had an a* value of -3.0 and a b* value of 2.0.

### Example 8

An information medium of Example 8 was produced in the same manner as Example 6, except that a UV-curable ink (a mixture of White No. 3 manufactured by Teikoku Printing Inks Mfg. Co., Ltd. and yellow ink) was used for the smoothing layer so that the surface of the smoothing layer had a glossiness of 43% at 45°; and that a pigment (indigo) was added so that the surface of the undercoat layer had an a* value of -0.1 and a b* value of -1.0.

### Comparative Example 3

An information medium of Comparative Example 3 was produced in the same manner as Example 5 except that the colorant-receiving layer was formed by a process comprising screen-printing a UV curing resin (UV SP 81019B manufactured by Teikoku Printing Inks Mfg. Co., Ltd.) and curing the resin with UV light.

### Comparative Example 4

An information medium of Comparative Example 4 was produced in the same manner as Example 6 except that the colorant-receiving layer was formed by a process comprising screen-printing a UV curing resin (UV SP 81019B manufactured by Teikoku Printing Inks Mfg. Co., Ltd.) and curing the resin with UV light.

### Performance Evaluation

The resulting information media of Examples 5 to 8 and Comparative Examples 3 and 4 were evaluated as shown below.

### Printing

An image was printed on the printable layer of each of the information media of Examples 5 to 8 and Comparative Examples 3 and 4 by using an inkjet printer (PM-970C manufactured by Seiko Epson Corporation).

### Evaluation

Sensory evaluation was visually conducted by 10 testers on the image printed on each of the information media of Examples 5 to 8 and Comparative Examples 3 and 4. The evaluation mark o was assigned when all the 10 testers stated that the print was better than the conventional print. The evaluation mark × was assigned when all the 10 testers stated that the print was equal to or worse than the conventional print. The results are also shown in Table 2.

**Table 2**

| | Glossiness of Undercoat Layer (%) | a* of Undercoat Layer | b* of Undercoat Layer | Image quality |
|---|---|---|---|---|
| Example 5 | 40 | 0.1 | -2.0 | ○ |
| Example 6 | 30 | 3.0 | -5.0 | ○ |
| Example 7 | 35 | -3.0 | 2.0 | ○ |
| Example 8 | 43 | -0.1 | -1.0 | ○ |
| Comparative Example 3 | 25 | 3.0 | 3.0 | × |
| Comparative Example 4 | 28 | 5.0 | 0.0 | × |

Table 2 indicates that the information media of Examples 5 to 8 each provided a high glossiness and a high quality print, whilst the print quality produced by each of Comparative Examples 3 and 4 was the same as that of the conventional product. The information media of Examples 5 to 8 each provided a high resolution and fine textures, and a single hair was able to be printed sharply. In contrast, the information media of Comparative Examples 3 and 4 each provided a low print quality and a low resolution and were not able to reproduce fine textures.

As described above in detail, the invention can provide an information medium having a printable layer which is safe at handling and highly glossy and which is capable of forming a high quality image thereon when printed.

## Claims

1. An information medium, comprising:
a printable layer that comprises an undercoat layer and a colorant-receiving layer, wherein
the colorant-receiving layer comprises fine particles, a binder and a cross-linking agent, and
the undercoat layer has a thickness of at least 15 µm.

2. An information medium of claim 1, wherein the fine particles comprise at least one selected from the group consisting of vapor-phase-synthesized silica, pseudo-boehmite and aluminum oxide; the binder is polyvinyl alcohol; the cross-linking agent is a boron compound; and the colorant-receiving layer further comprises a mordant.

3. An information medium of claim 1, wherein the colorant-receiving layer further comprises at least one of a compound represented by Formula (1) and a compound represented by Formula (2):
Formula (1) RO(CH₂CH₂O)ₙH
Formula (2) RO(CH₂CH(CH₃)O)ₙH
wherein in Formula (1) and (2), R represents a saturated hydrocarbon group having 1 to 12 carbon atoms, an unsaturated hydrocarbon group having 1 to 12 carbon atoms, a phenyl group, or an acyl group; and n represents an integer of 1 to 3.

4. An information medium of claim 3, wherein the at least one of a compound represented by Formula (1) and a compound represented by Formula (2) is water-soluble.

5. An information medium of claim 3, wherein R is a saturated hydrocarbon group having 1 to 4 carbon atoms in Formula (1) and Formula (2).

6. An information medium of claim 3, wherein the colorant-receiving layer is produced by a process comprising:
applying a coating liquid that includes the fine particles, the binder and the at least one of a compound represented by Formula (1) and a compound represented by Formula (2);
adding, to a formed coating layer, a solution that includes the cross-linking agent and a mordant, at a time of the application or before a time when the coating layer shows a falling drying rate during a process of drying the coating layer; and then
curing the coating layer.

7. An information medium of claim 3, wherein the colorant-receiving layer is produced by a process comprising:
applying a coating liquid which is produced by adding a solution including the binder, the cross-linking agent and the at least one of a compound represented by Formula (1) and a compound represented by Formula (2) to an aqueous dispersion including the fine particles and a dispersing agent to form a mixture and dispersing the mixture;
adding, to a formed coating layer, a solution including the cross-linking agent and a mordant at a time of the application or before a time when the coating layer shows a falling drying rate during a process of drying the coating layer; and then
curing the coating layer.

8. An information medium, comprising:
a printable layer that comprises at least an undercoat layer and a colorant-receiving layer, wherein
the colorant-receiving layer comprises fine particles, a binder and a cross-linking agent, and
the undercoat layer comprises a smoothing layer that controls glossiness of the printable layer and a chromaticity control layer that controls chromaticity of the printable layer.

9. An information medium according to claim 8, wherein the undercoat layer has an a* value of larger than -4 and smaller than 4 (-4 < a* < 4) and a b* value of larger than -6 and smaller than 3 (-6 < b* < 3) in L*a*b* colorimetric system according to JIS Z 8729 and CIE1976; and the smoothing layer has a glossiness of at least 30% at 45°.

10. An information medium of claim 8 or claim 9, wherein the fine particles comprise at least one selected from the group consisting of vapor-phase-synthesized silica, pseudo-boehmite and aluminum oxide; the binder is polyvinyl alcohol; the cross-linking agent is a boron compound; and the colorant-receiving layer further comprises a mordant.

11. An information medium of claim 8 or claim 9, wherein the colorant-receiving layer further comprises at least one of a compound represented by Formula (1) and a compound represented by Formula (2):
Formula (1) RO(CH₂CH₂O)ₙH
Formula (2) RO(CH₂CH(CH₃)O)ₙH
wherein in Formula (1) and Formula (2), R represents a saturated hydrocarbon group having 1 to 12 carbon atoms, an unsaturated hydrocarbon group having 1 to 12 carbon atoms, a phenyl group, or an acyl group; and n represents an integer of 1 to 3.

12. An information medium of claim 11, wherein the at least one of a compound represented by Formula (1) and a compound represented by Formula (2) is water-soluble.

13. An information medium of claim 11, wherein R is a saturated hydrocarbon group having 1 to 4 carbon atoms in Formula (1) and Formula (2).

14. An information medium of claim 11, wherein the colorant-receiving layer is produced by a process comprising:
applying a coating liquid that includes the fine particles, the binder and the at least one of a compound represented by Formula (1) and a compound represented by Formula (2);
adding, to a formed coating layer, a solution that includes the cross-linking agent and a mordant, at a time of the application or before a time when the coating layer shows a falling drying rate during a process of drying the coating layer; and then
curing the coating layer.

15. An information medium of claim 11, wherein the colorant-receiving layer is produced by a process comprising:
applying a coating liquid produced by adding a solution including the binder, the cross-linking agent and the at least one of a compound represented by Formula (1) and a compound represented by Formula (2) to an aqueous dispersion including the fine particles and a dispersing agent to form a mixture and dispersing the mixture;
adding a solution including the cross-linking agent and a mordant to a formed coating layer at a time of the application or before a time when the coating layer shows a falling drying rate during a process of drying the coating layer; and then
curing the coating layer.
